# EUROPÄISCHE PATENTANMELDUNG

(11) **EP 4 613 573 A1**
(43) Veröffentlichungstag der Anmeldung: **10.09.2025**
(21) Anmeldenummer: 25160569.7
(22) Anmeldetag: 27.02.2025
(51) Int. Cl.: B60R 25/01, B60R 25/24, G07C 1/00, E05C 1/00, E05B 81/76, E05B 81/78, G07C 9/00

(54) **BETÄTIGUNGSVORRICHTUNG FÜR EIN FAHRZEUG**

(30) Priorität: 04.03.2024 DE 102024106193
(71) Anmelder: Huf Hülsbeck & Fürst GmbH & Co. KG, 42551 Velbert (DE)
(72) Erfinder: Witte, Martin, 48683 Ahaus (DE); Schwarz, Marcel, 40822 Mettmann (DE); Wieczorek, Roland, 42553 Velbert (DE)
(74) Vertreter: Bals & Vogel Patentanwälte PartGmbB

(57) **Zusammenfassung**

Die Erfindung betrifft eine Betätigungsvorrichtung (100) für ein Zugangssystem (110) eines Fahrzeuges (200) zum Betätigen, vorzugsweise Entriegeln und/oder Öffnen und ggf. Schließen und/oder Verriegeln, eines, insbesondere grifflosen, beweglichen Teils (201) des Fahrzeuges (200),
aufweisend ein, insbesondere feststehendes, Flügelelement (10),
wobei das Flügelelement (10) dazu ausgeführt ist, von außen an dem beweglichen Teil (201) des Fahrzeuges (200) angeordnet zu werden,
und wobei das Flügelelement (10) als ein beidseitiger Schalter ausgeführt ist, um mindestens eine Betätigungshandlung (B1, B2) eines Benutzers (300), insbesondere eine Berührung, vorzugsweise eine Zugbewegung (B1) und/oder eine Druckbewegung (B2), zu erfassen.

## Beschreibung

Die Erfindung betrifft eine Betätigungsvorrichtung für ein Zugangssystem eines Fahrzeuges zum Betätigen, vorzugsweise Entriegeln und/oder Öffnen sowie Schließen und/oder Verriegeln, eines, insbesondere grifflosen, beweglichen Teils des Fahrzeuges. Ferner betrifft die Erfindung ein korrespondierendes Zugangssystem für ein Fahrzeug mit einer entsprechenden Betätigungsvorrichtung.

Betätigungsvorrichtungen in Form von Türgriffen (an Türen oder Klappen) für Zugangsvorrichtungen bei Fahrzeugen sind grundsätzlich bekannt. Bekannte Betätigungsvorrichtungen weisen oft Sensorvorrichtungen innerhalb der Türgriffe auf, um bewegliche Teile, beispielsweise in Form von Türen oder Klappen, bei Fahrzeugen automatisch zu betätigen. Bekannte Sensorvorrichtungen weisen zumeist Sensoren auf, die die Umgebung des Fahrzeuges überwachen können, um einen Benutzer in der Nähe zu erkennen. Moderne Fahrzeuge werden immer öfter mit aerodynamisch angepassten beweglichen Teilen ausgestattet, die möglichst ohne (zusätzliche) Spalten, Fugen und/oder Aussparungen, bspw. für Türgriffe, und vorzugsweise ohne Türgriffe ausgeführt werden. Dabei ist der Bauraum für Sensorvorrichtungen, mechanische und/oder elektronische Komponenten, begrenzt und oft nicht mit allen gewünschten Funktionen an einem Ort realisierbar.

Aufgabe der Erfindung ist daher, die voranstehend beschriebenen Nachteile zumindest teilweise zu überwinden. Insbesondere ist es Aufgabe der Erfindung, eine verbesserte Betätigungsvorrichtung für ein Zugangssystem eines Fahrzeuges zum Betätigen, vorzugsweise Entriegeln und/oder Öffnen sowie Schließen und/oder Verriegeln, eines, insbesondere grifflosen, beweglichen Teils des Fahrzeuges zur Verfügung zu stellen. Vorzugsweise ist Aufgabe der Erfindung, eine Betätigungsvorrichtung für ein Zugangssystem eines Fahrzeuges zum Betätigen, vorzugsweise Entriegeln und/oder Öffnen sowie Schließen und/oder Verriegeln, eines, insbesondere grifflosen, beweglichen Teils des Fahrzeuges bereitzustellen, die einen reduzierten Bauraum am Fahrzeug effektiv ausnutzt, die einfach und bequem montierbar ist, die das äußere Bild des Fahrzeuges und die Aerodynamik nicht beeinträchtigt, die erweiterte Funktionen bereitstellt, die zuverlässig im Betrieb ist und die eine sichere Betätigung des beweglichen Teils durch einen berechtigten Benutzer ermöglicht. Ferner ist es Aufgabe der vorliegenden Erfindung, ein korrespondierendes Zugangssystem für ein Fahrzeug mit einer entsprechenden Betätigungsvorrichtung zur Verfügung zu stellen. Beispielsweise kann ein Mobilfunktelefon eines Benutzers über die Betätigungsvorrichtung mit dem Zugangssystem kommunizieren, um gewünschte Funktionen am Fahrzeug auszuüben.

Diese Aufgabe wird gelöst durch eine Betätigungsvorrichtung für ein Zugangssystem eines Fahrzeuges zum Betätigen (umfassend vorzugsweise: Entriegeln und/oder Öffnen und/oder ggf. Schließen und/oder Verriegeln) eines, insbesondere grifflosen, beweglichen Teils des Fahrzeuges mit den Merkmalen des unabhängigen Vorrichtungsanspruchs und durch ein korrespondierendes Zugangssystem für ein Fahrzeug mit einer entsprechenden Betätigungsvorrichtung gemäß dem unabhängigen Systemanspruch. In den abhängigen Ansprüchen sind bevorzugte Weiterbildungen der Betätigungsvorrichtung aufgeführt. Merkmale, die zu den einzelnen Ausführungsformen der erfindungsgemäßen Betätigungsvorrichtung und des erfindungsgemäßen Zugangssystems offenbart werden, können in der Weise miteinander kombiniert werden, dass bezüglich der Offenbarung zu den Ausführungsformen stets wechselseitig Bezug genommen wird bzw. werden kann.

Die Erfindung stellt bereit eine Betätigungsvorrichtung für ein Zugangssystem eines Fahrzeuges zum Betätigen (umfassend vorzugsweise: Entriegeln und/oder Öffnen und/oder ggf. Schließen und/oder Verriegeln) eines, insbesondere grifflosen, beweglichen Teils des Fahrzeuges.

Das bewegliche Teil kann bspw. in Form einer Tür, z. B. einer Seitentür, einer Schwenktür oder einer Schiebetür, und/oder einer Klappe, z. B. einer Heckklappe, Tank- oder Ladeklappe, oder einer Motorhaube, des Fahrzeuges ausgebildet sein.

Üblicherweise sind mehrere bewegliche Teile am Fahrzeug vorgesehen, insbesondere um den Innenraum vom Fahrzeug verschließen zu können, die durch das Zugangssystem (umfassend ein Verriegelungssystem mit einem oder mehreren Schlössern) betätigt (d. h. ver- und/oder entriegelt und ggf. geöffnet und/oder verschlossen) werden können. Vorteilhafterweise kann jeweils eine Betätigungsvorrichtung für mehrere bewegliche Teile am Fahrzeug vorgesehen sein.

Unter einem Betätigen des beweglichen Teils (durch die Betätigungsvorrichtung, die wiederum ein Benutzer betätigen kann) können folgende Vorgänge verstanden werden:
- Entriegeln und/oder Öffnen des beweglichen Teils, und/oder
- Schließen und/oder Verriegeln des beweglichen Teils (z.B. durch ein Schloss).

Zum Betätigen des beweglichen Teils kann ein elektromechanisches Schloss vorgesehen werden, welches durch die Betätigungsvorrichtung (direkt oder indirekt) angesteuert werden kann.

Das bewegliche Teil kann zwischen einer Schließstellung und einer Öffnungsstellung bewegt werden.

In der Schließstellung kann das bewegliche Teil durch das Schloss am Fahrzeug mechanisch fixiert werden (Schließen des beweglichen Teils). In der Schließstellung des beweglichen Teils kann das Schloss einen Verriegelungsvorgang durchführen (Verriegeln des beweglichen Teils).

Um die Verriegelung aufzuheben, kann das Schloss einen Entriegelungsvorgang durchführen (Entriegeln des beweglichen Teils). Zum Freigeben der Öffnungsbewegung kann das Schloss einen Öffnungsvorgang durchführen (Öffnen des beweglichen Teils).

Sobald das Schloss das bewegliche Teil geöffnet hat, kann der Benutzer am, insbesondere feststehenden, Flügelelement greifen und an diesem ziehen, um das bewegliche Teil in seine Öffnungsstellung zu bewegen.

Das Schloss kann ferner die Bewegung des beweglichen Teils in die Öffnungsstellung zumindest unterstützen.

Weiterhin kann ein Türantrieb zur Bewegung des beweglichen Teils vorgesehen sein, um die Bewegung des beweglichen Teils in die Öffnungsstellung und/oder in die Schließstellung zumindest zu unterstützen.

Die Betätigungsvorrichtung gemäß Anspruch 1 weist auf:
- ein, insbesondere feststehendes, Flügelelement (kann ebenfalls als Wing bezeichnet werden),
   wobei das Flügelelement dazu ausgeführt ist, von außen an dem beweglichen Teil des Fahrzeuges angeordnet zu werden,
   und wobei das Flügelelement als ein beidseitiger Schalter ausgeführt ist, um mindestens eine Betätigungshandlung eines Benutzers, insbesondere eine Berührung, vorzugsweise eine Zugbewegung und/oder eine Druckbewegung, zu erfassen.

Vorteilhafterweise kann das Flügelelement ein Kommunikationselement, insbesondere in Form einer NFC-Antenne (Near-Field-Communication-Antenne), aufweisen.

Ebenfalls kann es vorteilhaft sein, dass die Betätigungsvorrichtung eine Trägereinheit für das Flügelelement aufweisen kann, wobei die Trägereinheit dazu ausgeführt sein kann, von innen an dem beweglichen Teil des Fahrzeuges angeordnet zu werden, wobei insbesondere die Trägereinheit eine Hauptelektronikeinheit mit einer Auswerteeinheit für das Kommunikationselement aufweisen kann, um einen Authentifizierungsvorgang (durch eine benutzerseitige Vorrichtung) mit einem Benutzer durchzuführen.

Die Erfindung erkennt, dass der Bauraum an Fahrzeugen begrenzt ist. Ferner erkennt die Erfindung, dass keine (zusätzlichen) Spalts an Fahrzeugen erwünscht sind. Weiterhin erkennt die Erfindung, dass moderne Fahrzeuge hohen aerodynamischen Ansprüchen entsprechen müssen. Des Weiteren erkennt die Erfindung, dass eine sichere und komfortable Zugangskontrolle zum Fahrzeuginnenraum mehrere Komponenten erfordert, die oft nicht an einem Ort untergebracht werden können.

Um einen reduzierten Bauraum am Fahrzeug effektiv auszunutzen, um eine einfache und bequeme Montage zu ermöglichen und um das äußere Bild des Fahrzeuges und die Aerodynamik nicht zu beeinträchtigen, schlägt die Erfindung vor, dass ein, insbesondere feststehendes, Flügelelement von außen an dem beweglichen Teil des Fahrzeuges angeordnet wird. Vorteilhafterweise kann dabei sämtliche vorteilhafte Sensorik im Wing angeordnet sein, um gewünschte Funktionen am Fahrzeug bzw. am Zugangssystem auszuüben, die zum Betätigen (umfassend vorzugsweise: Entriegeln und/oder Öffnen und/oder ggf. Schließen und/oder Verriegeln) des, insbesondere grifflosen, beweglichen Teils des Fahrzeuges dienen können.

Der Gedanke liegt dabei darin, dass das Flügelelement als ein beidseitiger Schalter ausgeführt ist, der sowohl von außen durch einen Druck, als auch von innen durch einen Zug betätigt werden kann. Durch die Betätigung des Wings können vielfältige Funktionen am Fahrzeug bzw. des Zugangssystems ausgelöst werden, wie z.B. das Ver- oder Entriegeln sowie das Öffnen oder Schließen des beweglichen Teils.

Für den beidseitigen Schalter können bspw. 4 LDC-Sensoren bzw. induktive Sensoren verwendet werden. Bei einer Druckbewegung von außen auf dem Wing können alle 4 induktive Sensoren die von außen auf den Wing einwirkende Druckkraft in Richtung zum Fahrzeug erfassen. Bei einer Zugbewegung an der Innenseite des Wings nach außen, weg von vom Fahrzeug, kann ebenfalls diese Zugkraft von allen 4 induktive Sensoren erfasst werden.

Vorteilhafterweise können 3 induktive Sensoren an einer Innenseite des Wings, die zum Fahrzeug ausgerichtet ist, angeordnet sein. Vorzugsweise kann 1 induktiver Sensor an einer Außenseite des Wings, die weg vom Fahrzeug ausgerichtet ist, angeordnet sein. Bevorzugt können unterschiedliche Anzahlen an induktiven Sensoren an einer Innenseite und an einer Außenseite des Wings angeordnet sein, um eine Druckbewegung (z. B.: 1 Signal wird stärker, 3 werden schwächer) von einer Zugbewegung (z. B.: 3 Signale werden stärker, 1 Signal wird schwächer) zu unterscheiden.

Im Inneren des Wings kann vorteilhafterweise eine Elektronikeinheit an einer beidseitig bestückten Leiterplatte angeordnet sein.

Auf der Leiterplatte können bspw. 4 Spulen (bzw. induktive Sensoreinheiten/Schaltkreise) für die induktiven Sensoren aufgebracht sein, z. B. drucktechnisch. Die induktiven Sensoreinheiten können über 4 Aktivierungselemente (sog. (Metall-)Targets) betätigt werden, die an Gehäuseschalen (Gehäuseteilen) vom Wing angeordnet sein können. Die Gehäuseschalen können beweglich relativ zu einer Trägerplatte angeordnet sein. Dadurch können die Gehäuseschalen flexible und/oder nachgiebige und/oder drückbare Aufnahmeelemente am feststehenden Flügelelement bilden, um eine Aufnahme einer Zugbewegung und/oder einer Druckbewegung zu ermöglichen.

Zur Abdichtung der Gehäuseschalen können Membranen vorgesehen sein, die die Gehäuseschalen (Gehäuseteile) vom Wing abdichten. Ferner können Schaumpads zur Rückstellung der Gehäuseteile nach einer Betätigung und zur Abdichtung des Inneren des Gehäuses vorgesehen sein.

Der Wing selbst, insbesondere seine innenliegende Trägerplatte, bleibt feststehend. Die Gehäuseschalen des Wings, die beweglich und/oder rückstellbar an der Trägerplatte angeordnet sind, dienen zur Befestigung der Aktivierungselemente bzw. der Targets für die induktiven Sensoren und zur Aufnahme einer Zugbewegung und/oder einer Druckbewegung.

Weiterhin kann eine Trägereinheit für das Flügelelement von innen an dem beweglichen Teil des Fahrzeuges angeordnet werden.

Auf diese Weise kann ein Spalt für die Montage sehr schmal gehalten werden. Zugleich kann eine einfache und bequeme Montage ermöglicht werden. Das äußere Bild und die aerodynamischen Eigenschaften des Fahrzeuges können dadurch auf eine vorteilhafte Weise gestaltet werden.

Vorteilhafterweise kann die Montage in zwei Schritten erfolgen. Zu diesem Zweck ist die Betätigungsvorrichtung zweiteilig aufgebaut, mit einem oberen Teil, nämlich dem Flügelelement und einem unteren Teil, nämlich der Trägereinheit, an der weitere Mechanik und Elektronik angeordnet werden können. Das obere und das untere Teil der Betätigungsvorrichtung können nach der Anordnung am Fahrzeug mechanisch und elektrisch miteinander verbunden werden.

Im ersten Schritt bei der Montage kann das obere Teil der Betätigungsvorrichtung von außen an der Tür angeordnet und ggf. befestigt werden.

Der zweite Schritt bei der Montage kann vom Türinnenraum (also Inneren des Fahrzeuges, vorzugsweise durch eine sog. Blindmontage) vorgenommen werden, wobei das untere Teil an das obere, ggf. bereits befestigte, Teil montiert wird. Vorteilhafterweise können für eine einfache Montage aneinander komplementäre Führungsteile an dem oberen und an dem unter Teil vorgesehen sein. Die beiden zusammengefügten Teile können ferner miteinander befestigt werden. Ferner kann noch ein vormontiertes Kabel, welches am oberen Teil zunächst gehalten werden kann, mit einer Buchse im unteren Teil verbunden werden, um somit die elektrische und/oder elektronische Komponente im oberen Teil mit der Hauptelektronikeinheit im unteren Teil zu verbinden.

Um trotz eines begrenzten Bauraums dennoch eine sichere Betätigung des beweglichen Teils durch einen berechtigten Benutzer zu ermöglichen, schlägt die Erfindung vor, dass das Kommunikationselement, insbesondere in Form einer NFC-Antenne, beabstandet zu seiner Auswerteeinheit angeordnet wird. Die NFC-Antenne kann dabei zur Kommunikation mit einer benutzerseitigen Vorrichtung, insbesondere in Form eines ID-Gebers und/oder Mobilfunktelefons, intelligente Uhr (mit Funkfunktion) oder dergleichen, dienen. Insbesondere kann die NFC-Antenne auch zum Auslösen einer Notfunktion (bei einem Stromausfall) dienen, da sie auch eine passive Kommunikation, gemeint ist ohne eigene elektrische Energie, ermöglicht.

Um das Bereitstellen und das Auswerten von Kommunikationssignalen durch eine räumliche Beabstandung zwischen dem Kommunikationselement und der Auswerteeinheit vor Störungen zu schützen, kann zwischen den Anschlüssen am Kommunikationselement und den Anschlüssen an der Auswerteeinheit ein verdrilltes zweiadriges Kabel vorgesehen sein.

Durch eine Verdrillung kann eine Ausbildung von parasitären Induktionseffekten auf eine einfache und effiziente Weise unterbrochen werden.

Das Kommunikationselement und seine Auswerteeinheit können ein NFC-Modul bilden, welches dazu dienen kann, einen Authentifizierungsvorgang mit einem Benutzer vorteilhafterweise durch die benutzerseitige Vorrichtung durchzuführen.

Dabei kann eine NFC-Antenne an einem oberen Teil, nämlich dem Flügelelement angeordnet werden. Um dort einen Bauraum für die Auswerteeinheit zu sparen, kann die Auswerteeinheit im unteren Teil, nämlich der Trägereinheit angeordnet werden. Die NFC-Antenne kann über ein Kabel, vorzugsweise ein Twist-Kabel mit 2 verdrillten Leitungen, elektrisch an die Auswerteeinheit angeschlossen werden. Hierdurch können elektrische Störungen vermieden oder zumindest reduziert werden.

Ferner kann vorgesehen sein, dass das Flügelelement eine Sensorvorrichtung aufweist, welche dazu ausgeführt ist, eine Annäherung und/oder mindestens eine Betätigungshandlung eines Benutzers zu erfassen. Bspw. kann am Flügelelement zunächst erkannt werden, ob sich ein Benutzer dem Fahrzeug nähert. Daraufhin kann ein Authentifizierungsvorgang eingeleitet werden. Alternativ kann zuerst ein Authentifizierungsvorgang durchgeführt werden, um die Sensorvorrichtung zu aktivieren. Nach einem Erfassen einer Annäherung und/oder einem positiven Authentifizierungsvorgang kann das Fahrzeug entriegelt werden. Nach einem Erfassen einer Annäherung und/oder einem positiven Authentifizierungsvorgang kann eine Betätigungshandlung eines Benutzers am Flügelelement sensiert werden. Nach einer erfassten Betätigungshandlung eines Benutzers, bspw. durch Ziehen, am Flügelelement kann vorteilhafterweise ein Öffnungsvorgang eingeleitet werden.

Weiterhin kann vorgesehen sein, dass das Flügelelement eine Sensorauswerteelektronik mit einer Sensorauswerteeinheit für die Sensorvorrichtung aufweisen kann. Auf diese Weise kann bauraumtechnisch eine nahe Positionierung der Sensorauswerteeinheit an der Sensorvorrichtung ermöglicht werden. Auf diese Weise können verbesserte kapazitive und/oder induktive Messungen durchgeführt werden.

Des Weiteren kann vorgesehen sein, dass die Sensorvorrichtung eine erste Sensoreinheit, bspw. in Form einer induktiven Sensoreinheit (z. B. umfassend zwei, drei, vier oder mehrere LDC-Sensoren), aufweist, um mindestens eine Betätigungshandlung des Benutzers, bspw. eine Berührung, z. B. eine Zugbewegung (in die Öffnungsrichtung des beweglichen Teils) und/oder eine Druckbewegung (in die Schließrichtung des beweglichen Teils), am Flügelelement aufzunehmen. Mithilfe von induktiven Messungen können leichte Berührungen sensitiv gemessen werden. Damit können Betätigungshandlungen durch Drücken oder Ziehen am Flügelelement sensiert werden, die einfach und bequem sowie ohne großen Kraftaufwand durchgeführt werden können und die eine fließende Betätigung des beweglichen Teils ermöglichen können.

Vorteilhafterweise kann ein beidseitiger Schalter am Flügelelement bereitgestellt werden, der sowohl von außen durch einen Druck, als auch von innen durch einen Zug betätigt werden kann. Durch unterschiedliche Betätigungshandlungen können unterschiedliche Vorgänge am Fahrzeug bzw. am Zugangssystem frei programmierbar ausgelöst werden, wie z. B. das Ver- oder Entriegeln sowie das Öffnen oder Schließen des Schlosses.

Für einen beidseitigen Schalter können bspw. vier induktive Sensoren verwendet werden. Bei einer Druckbewegung von außen auf dem Flügelelement können alle vier Sensoren die einwirkende Druckkraft erfassen. Bei einer Zugbewegung von innen am Wing können ebenfalls alle vier Sensoren die Zugkraft erfassen.

Im Inneren des Flügelelementes kann eine Sensorauswerteeinheit auf einer beidseitig bestückten Leiterplatte vorgesehen werden, auf der die vier Spulen für die induktiven Sensoren drucktechnisch aufgebracht sein können. Die Sensoren können über vier Betätigungselemente, sog. Targets, aus einem leitfähigen Material, insbesondere Metall, betätigt werden, die an den Außenschalen bzw. Gehäuseteilen des Flügelelementes angeordnet sein können.

Darüber hinaus kann vorgesehen sein, dass die Sensorvorrichtung eine zweite Sensoreinheit, insbesondere in Form einer kapazitiven Sensoreinheit, aufweist, um eine Annäherung des Benutzers zum Flügelelement zu erfassen. Dadurch können berührungslose Betätigungshandlungen in Form einer Annäherung erfasst werden. Die erfasste Annäherung des Benutzers kann dazu dienen, um einen Authentifizierungsvorgang einzuleiten und/oder eine erste Sensoreinheit, insbesondere in Form einer induktiven Sensoreinheit, einzuschalten. Grundsätzlich ist es aber auch denkbar, dass zunächst ein Authentifizierungsvorgang durchgeführt werden kann und danach die zweite Sensoreinheit und/oder die erste Sensoreinheit aktiviert werden können/kann.

Ein Entriegeln des beweglichen Teils kann vorzugsweise nach einem Erfassen einer Annäherung und/oder einem positiven Authentifizierungsvorgang eingeleitet werden.

Vorteilhafterweise kann das Flügelelement speziell dazu ausgeführt sein, am beweglichen Teil in Form einer Tür oder einer Klappe des Fahrzeuges angeordnet zu werden. Auf diese Weise kann eine einfache, bequeme und komfortable Betätigung des beweglichen Teils ermöglicht werden.

Zudem ist es denkbar, dass das Flügelelement dazu ausgeführt sein kann, an einem Spalt zwischen dem beweglichen Teil und einer beweglichen Fensterscheibe des Fahrzeuges angeordnet zu werden. Außerdem ist es denkbar, dass das Flügelelement dazu ausgeführt ist, an einem Spalt zwischen dem beweglichen Teil und einem Karosserieelement des Fahrzeuges angeordnet zu werden. Auf diese Weise kann das Flügelelement an Orten angeordnet werden, die das äußere Erscheinungsbild und die aerodynamischen Eigenschaften des Fahrzeuges möglichst nicht beeinträchtigen.

Vorteilhafterweise kann das Flügelelement dazu ausgeführt sein, beabstandet zur Trägereinheit angeordnet zu werden. Auf diese Weise kann der begrenzte und oft verteilte Bauraum am Fahrzeug effektiv ausgenutzt werden.

Vorzugsweise kann das Kommunikationselement am Flügelelement und die Auswerteeinheit für das Kommunikationselement beabstandet zueinander angeordnet sein, insbesondere in einem Abstand von mindestens 5 cm, 10 cm, oder mehr. Auf diese Weise kann eine verbesserte Verteilung von elektrischen und/oder elektronischen Bauteilen an unterschiedlichen Orten ermöglicht werden.

Um sicherzustellen, dass eine Kommunikation zwecks Authentifizierung nicht beinträgt wird, kann zwischen dem Kommunikationselement am Flügelelement und der Auswerteeinheit für das Kommunikationselement an der Trägereinheit ein verdrilltes zwei adriges Kabel vorgesehen sein.

Ferner kann vorgesehen sein, dass das Flügelelement ein Gehäuse aufweist, das dazu ausgeführt ist, eine erste Leiterplatte für die Sensorvorrichtung, die Sensorauswerteelektronik, das Kommunikationselement und/oder eine Beleuchtungseinheit aufzunehmen. Auf diese Weise können die elektrischen und/oder elektronischen Komponenten im Flügelelement geschützt aufgenommen werden.

Weiterhin ist es denkbar, dass das Gehäuse mehrteilig ausgeführt sein kann, bspw. aufweisend:
- ein erstes Gehäuseteil bzw. eine erste Gehäuseschale (Innenschale), welche(s) in einer Gebrauchsposition am Fahrzeug zu einem Innenraum des Fahrzeuges ausgerichtet werden kann,
- ein zweites Gehäuseteil bzw. eine zweite Gehäuseschale (Außenschale), welche(s) in einer Gebrauchsposition am Fahrzeug nach außen ausgerichtet werden kann, und/oder
- ein drittes Gehäuseteil (Kappe), welches vorzugsweise dazu ausgeführt sein kann, das Gehäuse nach einer Befestigung am Montageort zu verschließen.

Vorzugsweise kann das Gehäuse des Flügelelementes eine Dichtung, bspw. in Form einer Membran, aufweisen, um einen Innenraum des Gehäuses abzudichten. Auf diese Weise können die elektrischen und/oder elektronischen Komponenten im Flügelelement vor Witterungseinflüssen geschützt werden. Eine Membran kann außerdem vorteilhaft sein, um eine relative Verstellung von Gehäuseteilen zu einander zu erlauben, wenn bspw. eine Druckbewegung mehr Bewegung an einer Außenschale bewirkt als an einer Innenschale. Zudem kann eine Membran dazu beitragen, dass das Gehäuse beweglich relativ zu einer Trägereinheit gelagert wird.

Die Dichtung kann zwischen mehreren Gehäuseteilen angeordnet sein, um einen Innenraum des Gehäuses abzudichten. Die Dichtung kann mehrere Gehäuseteile umfangsseitig umschließen, um einen Innenraum des Gehäuses abzuschließen. Denkbar ist bspw., dass die Dichtung stoffschlüssig (bspw. durch Kleben) und/oder formschlüssig und/oder kraftschlüssig (bspw. durch Verrasten und/oder Verklemmen) mit dem Gehäuse, insbesondere mit mehreren Gehäuseteilen, verbunden sein kann.

Des Weiteren ist es denkbar, dass ein erstes Gehäuseteil des Gehäuses mindestens ein, zwei, drei, vier oder mehrere (in einem bevorzugten Ausführungsbeispiel drei) Aktivierungselemente (sog. Targets) aufweist, um eine erste Betätigungshandlung, insbesondere in Form einer Zugbewegung am Flügelelement, aufzunehmen, die bspw. zum Entriegeln und/oder Öffnen des beweglichen Teils dienen kann.

Darüber hinaus ist es denkbar, dass ein zweites Gehäuseteil des Gehäuses mindestens ein, zwei, drei, vier oder mehrere (in einem bevorzugten Ausführungsbeispiel ein) Aktivierungselement(e) (sog. Target(s)) aufweist, um eine zweite Betätigungshandlung, insbesondere in Form einer Druckbewegung am Flügelelement, aufzunehmen, die bspw. zum Schließen und/oder Verriegeln des beweglichen Teils dienen kann.

Vorzugsweise kann ein erstes Gehäuseteil (Innenschale) und ein zweites Gehäuseteil (Außenschale) des Gehäuses eine unterschiedliche Anzahl an Aktivierungselementen aufweisen, um eine erste Betätigungshandlung, insbesondere in Form einer Zugbewegung, von einer zweiten Betätigungshandlung, insbesondere in Form einer Druckbewegung, am Flügelelement eindeutig zu unterscheiden. Bspw. können 3 Aktivierungselemente an einer Innenschale des Gehäuses, die zum Fahrzeug ausgerichtet ist, angeordnet sein. Bspw. kann 1 Aktivierungselement an einer Außenschale des Gehäuses, die weg von vom Fahrzeug ausgerichtet ist, angeordnet sein. Bevorzugt können unterschiedliche Anzahlen an Aktivierungselementen an einer Innenschale und an einer Außenschale des Gehäuses angeordnet sein, um eine Druckbewegung (z. B.: 1 Signal wird stärker beim Drücken an der Außenseite, 3 werden schwächer an der Innenseite) von einer Zugbewegung (z. B.: 3 Signale werden stärker beim Ziehen an der Innenseite, 1 Signal wird schwächer an der Außenseite) zu unterscheiden.

Das mindestens eine, die zwei, drei, vier oder mehrere Aktivierungselement/e kann/können elektrisch leitend ausgeführt sein, um beim Bewegen des Gehäuses relativ zur Trägerplatte ein induktives Signal in der Sensorvorrichtung zu erzeugen.

Auf diese Weise können unterschiedliche Betätigungshandlungen durch Drücken oder Ziehen am Flügelelement bereitgestellt werden, die einfach und bequem sowie ohne großen Kraftaufwand durchgeführt werden können und die einen fließenden Betätigungsvorgang ermöglichen können. Durch unterschiedliche Betätigungshandlungen kann ein beidseitiger Schalter am Flügelelement bereitgestellt werden, der sowohl von außen durch eine Druckbewegung, als auch von innen durch eine Zugbewegung betätigt werden kann. Durch unterschiedliche Betätigungshandlungen können unterschiedliche Vorgänge am Fahrzeug bzw. am Zugangssystem flexibel programmiert werden, wie z. B. Öffnen oder Schließen des beweglichen Teils.

Zudem kann das Flügelelement eine Trägerplatte aufweisen. Vorzugsweise kann die Trägerplatte eine erste Leiterplatte für die Sensorvorrichtung und die Sensorauswerteelektronik abstützen. Grundsätzlich kann die Trägerplatte dazu ausgeführt sein, eine erste Leiterplatte für die Sensorvorrichtung, die Sensorauswerteelektronik, das Kommunikationselement und/oder eine Beleuchtungseinheit abzustützen.

Insbesondere ist es denkbar, dass die Trägerplatte in einer Einbausituation am Fahrzeug unbeweglich relativ zum Fahrzeug befestigbar ist. Die Trägerplatte kann vorteilhafterweise ein feststehendes bzw. unbewegliches Element des Flügelelementes bilden. Vorteilhafterweise kann das Gehäuse des Flügelelementes beweglich relativ zur Trägerplatte gelagert sein, um eine Aufnahme mindestens einer Betätigungshandlung des Benutzers, insbesondere einer Berührung, vorzugsweise einer Zugbewegung und/oder einer Druckbewegung, zu ermöglichen. Dabei können leichte Berührungen, bspw. in Form von Drücken oder Ziehen, am ansonsten feststehenden Flügelelement erfasst werden.

Vorteilhafterweise kann das Gehäuse (mit seinen Gehäuseschalen) des Flügelelementes als ein flexibles und/oder nachgiebiges und/oder drückbares Aufnahmeelement am feststehenden Flügelelement bilden, um eine Aufnahme mindestens einer Betätigungshandlung des Benutzers, insbesondere einer Berührung, vorzugsweise einer Zugbewegung und/oder einer Druckbewegung, zu ermöglichen.

Vorzugsweise kann das Flügelelement ein Rückstellelement, bspw. in Form eines Schaumpads und/oder einer Rückstellfeder, für das Gehäuse des Rückstellelementes aufweisen. Das Rückstellelement kann dazu dienen, um das Gehäuse des Flügelelementes nach einer Aufnahme mindestens einer Betätigungshandlung des Benutzers, insbesondere einer Berührung, vorzugsweise einer Zugbewegung und/oder einer Druckbewegung, relativ zur Trägerplatte in eine Ruheposition zurückzustellen. Das Rückstellelement kann dazu dienen, um einen Innenraum des Gehäuses abzuschließen und/oder abzudichten.

Das Rückstellelement kann an der Trägerplatte abgestützt sein. Bspw. ist denkbar, dass das Rückstellelement stoffschlüssig (bspw. durch Kleben) und/oder formschlüssig und/oder kraftschlüssig (bspw. durch Verrasten und/oder Verklemmen) an der Trägerplatte befestigt sein kann.

Vorteilhafterweise kann am Flügelelement ein, vorzugsweise vormontiertes, Kabel mit einem Stecker vorgesehen sein, um eine erste Leiterplatte im Flügelelement an eine zweite Leiterplatte in der Trägereinheit elektrisch, datentechnisch und/oder kommunikationstechnisch anzuschließen, insbesondere nachdem (erstens) das Flügelelement von außen am beweglichen Teil des Fahrzeuges angeordnet wurde und nachdem (zweitens) die Trägereinheit von innen am beweglichen Teil des Fahrzeuges angeordnet wurde und vorzugsweise nachdem (drittens) die Trägereinheit am Flügelelement befestigt wurde. Auf diese Weise kann eine Montage der Betätigungsvorrichtung noch weiter erleichtert und die elektrische Kontaktierung von elektrischen und/oder elektronischen Komponenten einerseits im Flügelelement und andererseits in der Trägereinheit vereinfacht werden.

Außerdem kann das Flügelelement eine Beleuchtungseinheit, insbesondere in Form einer LED-Einheit, aufweisen, die dazu ausgeführt ist, um die Betätigungsvorrichtung für eine Betätigung sichtbar zu machen, um eine Ambientebeleuchtung des Flügelelements bereitzustellen, und/oder um eine Betätigung der Betätigungsvorrichtung zu erleichtern. Die Beleuchtungseinheit kann ferner durch Ihre Leuchtweise dem Benutzer eine Rückmeldung bei der Betätigung geben. Ferner kann die Beleuchtungseinheit den Benutzer warnen, um eine Stoßschutz und/oder Klemmschutz bereitzustellen.

Ferner kann die Sensorauswerteelektronik eine erste Sensorauswerteeinheit für eine erste Sensoreinheit, insbesondere in Form einer induktiven Sensoreinheit, aufweisen. Weiterhin kann die Sensorauswerteelektronik eine zweite Sensorauswerteeinheit für eine zweite Sensoreinheit, insbesondere in Form einer kapazitiven Sensoreinheit, aufweisen. Auf diese Weise kann bauraumtechnisch eine nahe Positionierung der Sensorauswerteeinheit an der Sensorvorrichtung eine verbesserte kapazitive und/oder induktive Messungen ermöglicht werden.

Weiterhin kann das Flügelelement einen ersten Montageträger, insbesondere umfassend eine Metalllegierung, vorzugsweise Zinklegierung, aufweisen, der dazu ausgeführt ist, um das Flügelelement von außen am beweglichen Teil des Fahrzeuges, bevorzugt form- und/oder kraftschlüssig, bspw. mithilfe einer Schraubverbindung, zu befestigen. Auf diese Weise kann eine einfache Befestigung des Flügelelements am beweglichen Teil des Fahrzeuges ermöglicht werden.

Des Weiteren kann das Flügelelement einen ersten Montageträger aufweisen, der dazu ausgeführt ist, um das Flügelelement an einem zweiten Montageträger der Trägereinheit zu befestigen. Auf diese Weise kann eine einfache Befestigung des Flügelelements an der Trägereinheit ermöglicht werden.

Zudem ist es denkbar, dass das Flügelelement, insbesondere der erste Montageträger, und die Trägereinheit, insbesondere der zweite Montageträger derart ausgebildet sind, dass die Sensorauswerteelektronik, insbesondere die erste Leiterplatte, und die Hauptelektronikeinheit, insbesondere die zweite Leiterplatte versetzt zueinander, bspw. um 90°, angeordnet sein können. Auf diese Weise kann eine zweigeteilte Leiterplatte bzw. eine zweiteilige Elektronik für die Betätigungsvorrichtung bereitgestellt werden, die an einem begrenzten und verteilten Bauraum angepasst werden kann. Insbesondere die Gegebenheiten an beweglichen Teilen können dadurch berücksichtigt werden.

Ferner kann vorgesehen sein, dass die Trägereinheit ein Gehäuse aufweist, das dazu ausgeführt ist, eine zweite Leiterplatte für die Hauptelektronikeinheit, eine Antriebseinheit für eine Entkoppelungseinheit, die Entkoppelungseinheit, ein Verbindungselement und/oder ein Notentriegelungsmechanismus aufzunehmen. Auf diese Weise können die mechanischen, elektrischen und/oder elektronischen Komponenten in der Trägereinheit geschützt aufgenommen werden.

Vorteilhafterweise kann die Trägereinheit eine Antriebseinheit für eine Entkoppelungseinheit und die Entkoppelungseinheit selbst aufweisen, wobei die Entkoppelungseinheit dazu ausgeführt ist, eine mechanische Verbindung zwischen dem Flügelelement und der Trägereinheit zu lösen, insbesondere wenn die Hauptelektronikeinheit und/oder die Sensorauswerteelektronik ein fahrzeugseitiges Crashsignal empfangen hat. Nach einem Empfang eines Crashsignals kann die Antriebseinheit die Entkoppelungseinheit entsprechend ansteuern, um eine Notentriegelung bereitzustellen. Auf diese Weise kann den Rettungskräften die Betätigung des beweglichen Teils und somit der Zugang zum Fahrzeug ermöglicht werden, sogar dann, wenn die Fahrzeugelektronik ausfällt. Zur Betätigung des beweglichen Teils kann das Flügelelement wieder beweglich gemacht werden, um mechanisch, bspw. über einen Bowdenzug, das Schloss zu betätigen.

Vorzugsweise kann die Trägereinheit ein Verbindungselement, insbesondere in Form einer Verbindungsachse, aufweisen, um das Flügelelement bewegbar, bspw. schwenkbar und/oder drehbar, an der Trägereinheit zu halten, insbesondere wenn eine mechanische Verbindung zwischen dem Flügelelement und der Trägereinheit gelöst wurde, bspw. wenn die Hauptelektronikeinheit und/oder die Sensorauswerteelektronik ein fahrzeugseitiges Crashsignal empfangen hat. Auf diese Weise kann sichergestellt werden, dass das Flügelelement vom Fahrzeug nicht herunterfällt und trotzdem beweglich ist, um eine Notentriegelung zu ermöglichen.

Weiterhin kann vorgesehen sein, dass die Trägereinheit einen Hebel für einen Bowdenzug und den Bowdenzug aufweist, um einen Notentriegelungsmechanismus im Crashfall bereitzustellen. Die Notentriegelung kann vorteilhafterweise mithilfe des Flügelelementes bereitgestellt werden, welches bewegbar, bspw. schwenkbar und/oder drehbar, relativ zu der Trägereinheit betätigt werden kann, um ein elektromechanisches Schloss des Fahrzeuges zu betätigen, insbesondere zum Entriegeln und/oder Öffnen, sogar dann, wenn die Fahrzeugelektronik ausfällt.

Des Weiteren kann die Trägereinheit eine (bspw. angeformte) Buchse für einen Stecker am Kabel aufweisen, um eine erste Leiterplatte im Flügelelement an eine zweite Leiterplatte in der Trägereinheit elektrisch, datentechnisch und/oder kommunikationstechnisch anzuschließen, insbesondere nachdem (erstens) das Flügelelement von außen am beweglichen Teil des Fahrzeuges angeordnet wurde und nachdem (zweitens) die Trägereinheit von innen am beweglichen Teil des Fahrzeuges angeordnet wurde und vorzugsweise nachdem (drittens) die Trägereinheit am Flügelelement befestigt wurde. Auf diese Weise kann eine Montage der Betätigungsvorrichtung noch weiter erleichtert und die elektrische Kontaktierung von elektrischen und/oder elektronischen Komponenten einerseits im Flügelelement und andererseits in der Trägereinheit vereinfacht werden.

Darüber hinaus kann die Trägereinheit, insbesondere das Gehäuse der Trägereinheit, eine (bspw. angeformte) Buchse aufweisen, um die Betätigungsvorrichtung elektrisch, datentechnisch und/oder kommunikationstechnisch mit einer fahrzeugseitigen Steuervorrichtung zu verbinden. Auf diese Weise kann eine vollfunktionsfähige und einsatzbereite Betätigungsvorrichtung bereitgestellt werden.

Vorteilhafterweise können/kann die Sensorauswerteelektronik und/oder die Hauptelektronikeinheit eine Kommunikationsschnittstelle zu einer fahrzeugseitigen Steuervorrichtung aufweisen, die zum Betätigen des Schlosses ausgeführt ist. Bspw. kann die Hauptelektronikeinheit ein Crashsignal von der fahrzeugseitigen Steuervorrichtung erhalten. Bspw. kann die Sensorauswerteelektronik mindestens ein Signal über den Zustand des Schlosses von der fahrzeugseitigen Steuervorrichtung erhalten. Über die Kommunikationsschnittstelle zu einer fahrzeugseitigen Steuervorrichtung können Betätigungssignale (zum Betätigen des beweglichen Teils) gesendet werden.

Zudem kann vorgesehen sein, dass die Hauptelektronikeinheit mit einer Steuereinheit zum Bereitstellen von Steuersignalen für das Zugangssystem ausgeführt ist, die dazu dienen können, um das bewegliche Teil des Fahrzeuges zu betätigen, insbesondere zu entriegeln und/oder zu Öffnen und/oder zu schließen und/oder zu verriegeln.

Ferner kann es von Vorteil sein, dass die Hauptelektronikeinheit eine NFC-Messverarbeitungseinheit, eine NFC-Schnittstelle, insbesondere in Form eines NFC-Transceivers, enthält. Auf diese Weise kann der Platz im Flügelelement weiterhin eingespart werden. Bis auf die NFC-Antenne können somit sämtliche elektrische und/oder elektronische Komponenten für die Auswertung und Verarbeitung von NFC-Signalen in der Trägereinheit beabstandet von dem Flügelelement untergebracht werden.

Weiterhin kann vorgesehen sein, dass die Hauptelektronikeinheit mindestens eine Kommunikationsschnittstelle zu einem Fahrzeugnetz aufweist, bspw. umfassend eine CAN-Schnittstelle und/oder eine LIN-Schnittstelle, und/oder dass die Hauptelektronikeinheit eine Steuereinheit für die mindestens eine Kommunikationsschnittstelle zu einem Fahrzeugnetz aufweist. Auf diese Weise kann eine einfache Anbindung an das Fahrzeugnetz sichergestellt werden.

Des Weiteren kann vorgesehen sein, dass die Hauptelektronikeinheit eine Beleuchtungsschnittstelle, insbesondere in Form einer LED-Schnittstelle, aufweist, und/oder dass die Hauptelektronikeinheit eine Steuereinheit für eine Beleuchtung aufweist. Bis auf die LEDS können somit sämtliche elektrische und/oder elektronische Komponenten für die Ansteuerung der Beleuchtung in der Trägereinheit beabstandet von dem Flügelelement untergebracht werden.

Zudem kann die Sensorvorrichtung mindestens ein Radar-Sensorelement, ein UWB-Sensorelement, insbesondere umfassend ein Pulsradar- oder ein Dauerstrichradar-Messverfahren, und/oder ein Piezo-Sensorelement aufweisen. Ein Radar-Sensorelement kann bspw. zum Erfassen einer Annäherung und/oder zum Bereitstellen eines Stoß- und/oder Klemmschutzes, z. B. anstelle einer kapazitiven Sensoreinheit, dienen. Ein UWB-Sensorelement kann bspw. zum Erfassen von unterschiedlichen berührungslosen Betätigungshandlungen dienen, die z. B. unterschiedliche Bewegungsrichtungen aufweisen können. Ein Piezo-Sensorelement kann bspw. zum Erfassen einer Berührung, z. B. zum Verriegeln des beweglichen Teils, dienen.

Vorzugsweise kann die erste Elektronikvorrichtung dazu ausgeführt sein, die Sensorvorrichtung, zum Erfassen eines Hindernisses im Bewegungsbereich des beweglichen Teiles, bspw. mithilfe einer Detektion, z. B. einer kapazitiven Detektion und/oder einer Radar-Detektion, anzusteuern. Vorteilhafterweise kann die erste Elektronikvorrichtung dazu ausgeführt sein, ein Warnsignal und/oder ein Stoppsignal bereitzustellen, wenn die Sensorvorrichtung ein Hindernis im Bewegungsbereich des beweglichen Teiles erfasst hat. Auf diese Weise kann die Benutzersicherheit beim Betätigen des beweglichen Teils sichergestellt werden.

Die Erfindung stellt bereit ein Zugangssystem für ein Fahrzeug, aufweisend eine Betätigungsvorrichtung, die wie oben beschrieben ausgeführt sein kann. Mithilfe des Zugangssystems können die gleichen Vorteile erreicht werden, die oben im Zusammenhang mit der Betätigungsvorrichtung beschrieben wurden. Auf diese Vorteile wird vorliegend vollumfänglich Bezug genommen.

Weitere Vorteile und Details der Erfindung werden in der nachfolgenden Beschreibung offenbart. Es zeigen:
- Fig. 1: eine seitliche Ansicht eines Fahrzeuges mit Betätigungsvorrichtungen,
- Fig. 2: eine Ansicht von oben auf ein Fahrzeug mit Betätigungsvorrichtungen,
- Fig. 3: eine schematische Darstellung einer Betätigungsvorrichtung im Schnitt entlang einer Fahrzeugquerrichtung,
- Fig. 4: eine schematische Darstellung einer Betätigungsvorrichtung.

In den nachfolgenden Figuren werden für die gleichen technischen Merkmale auch von unterschiedlichen Ausführungsbeispielen die gleichen Bezugszeichen verwendet.

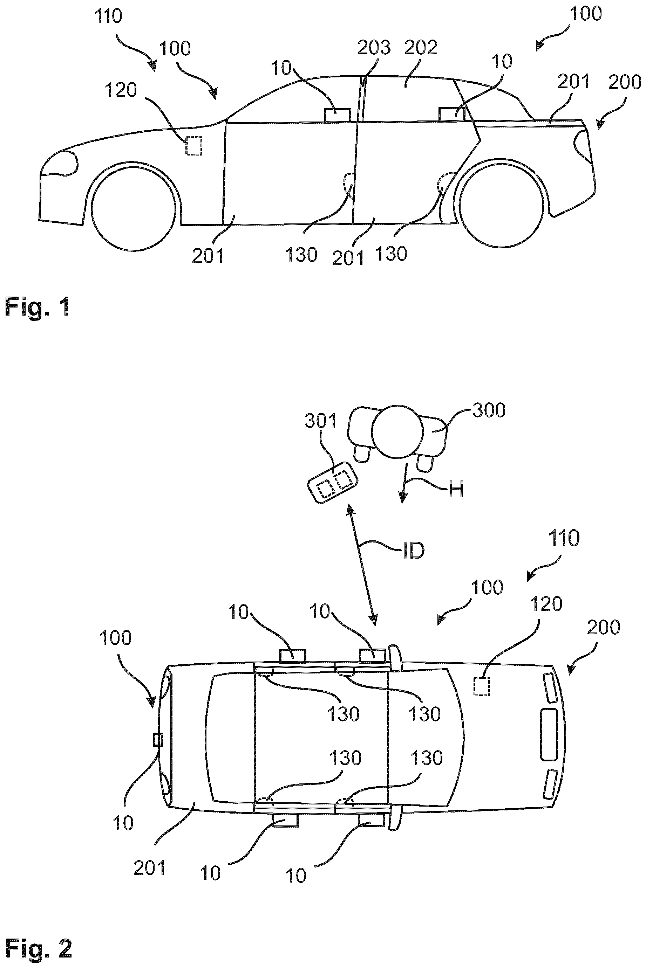

Die Fig. 1 bis 4 zeigen eine Betätigungsvorrichtung 100 für ein Fahrzeug 200, vorzugsweise für ein Zugangssystem 110 des Fahrzeuges 200, zum, bevorzugt automatischen, Betätigen eines, insbesondere grifflosen, beweglichen Teils 201 des Fahrzeuges 200.

Wie es die Fig. 1 und 2 verdeutlichen, kann das bewegliche Teil 201 bspw. in Form einer Tür, z. B. einer Seitentür, oder einer Klappe, z. B. einer Heckklappe, des Fahrzeuges 200 ausgeführt sein.

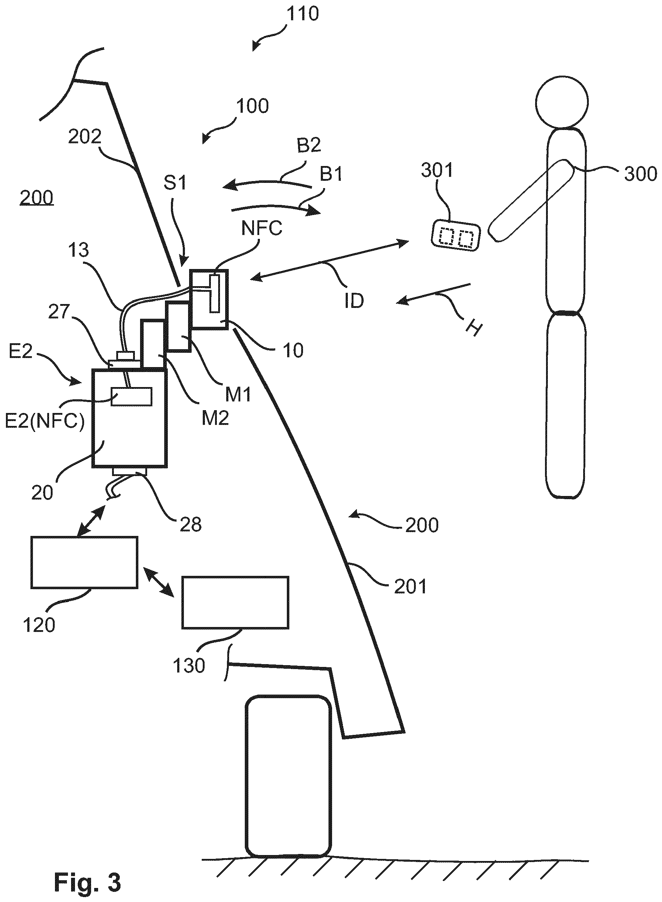

Wie es die Fig. 2 und 3 andeuten, kann ein Betätigen des beweglichen Teils 201 durch einen Benutzer 300 (mit einer benutzerseitigen Vorrichtung 301 zur Identifikation bzw. Authentifizierung) veranlasst sein und ein Entriegeln und/oder Öffnen des beweglichen Teils 201 und/oder ein Schließen und/oder Verriegeln des beweglichen Teils 201 umfassen.

Ein Bewegen des beweglichen Teils 201 kann ein Öffnen und/oder Schließen des beweglichen Teils 201 umfassen.

Wie es die Fig. 1 bis 3 verdeutlichen, kann das Zugangssystem 110 mindestens ein elektromechanisches Schloss 130 aufweisen, welches insbesondere mithilfe einer Steuervorrichtung 120 angesteuert werden kann, um das bewegliche Teil 201 zu betätigen, insbesondere zum Entriegeln und/oder Öffnen sowie zum Schließen und/oder Verriegeln.

Die Betätigungsvorrichtung 100, die Steuervorrichtung 120 und das mindestens eine Schloss 130 bilden zusammen das Zugangssystem 110.

Die Betätigungsvorrichtung 100 kann korrespondierende Steuersignale an die Steuervorrichtung 120 bereitstellen, um ein Entriegeln und/oder Öffnen des beweglichen Teils 201 und/oder ein Schließen und/oder Verriegeln des beweglichen Teils 201 zu bewirken, wenn der Benutzer 300 die Betätigungsvorrichtung 100 entsprechend betätigt hat.

Wie die Fig. 3 andeutet, ist der Bauraum an Fahrzeugen 200 begrenzt. Grundsätzlich sind an Fahrzeugen 200 keine (zusätzlichen) Spalts S erwünscht. Weiterhin müssen moderne Fahrzeuge 200 hohen aerodynamischen Ansprüchen entsprechen. Des Weiteren erfordert eine sichere und komfortable Zugangskotrolle zum Fahrzeuginnenraum mehrere Komponenten, die oft nicht an einem Ort am Fahrzeug untergebracht werden können.

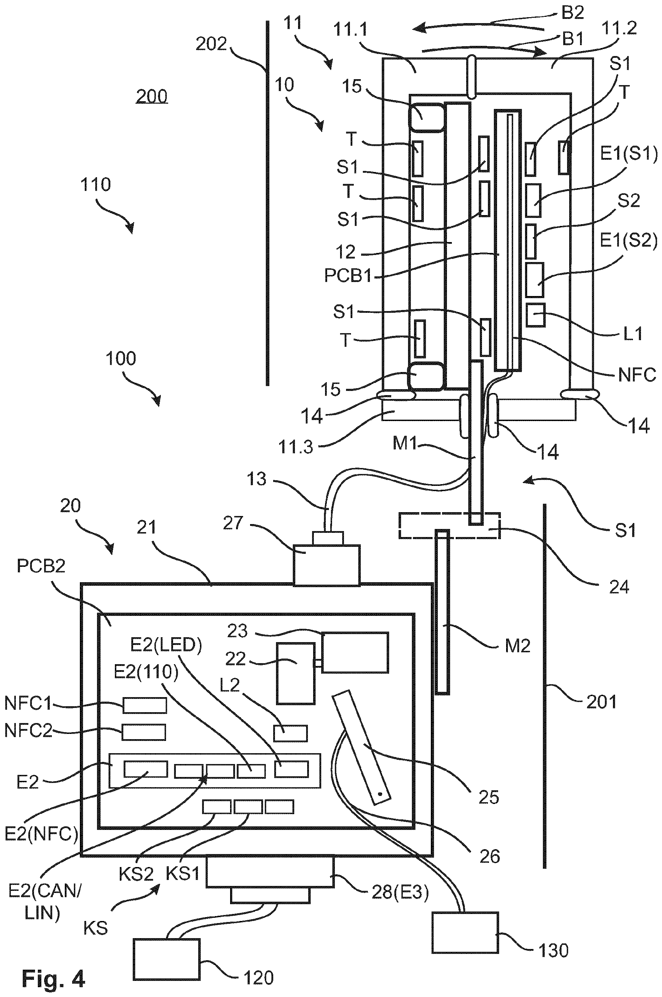

Wie es die Fig. 3 und 4 verdeutlichen, weist die Betätigungsvorrichtung 100 auf:
- ein, insbesondere feststehendes, Flügelelement 10 (kann ebenfalls als Wing bezeichnet werden),
   wobei das Flügelelement 10 dazu ausgeführt ist, von außen an dem beweglichen Teil 201 des Fahrzeuges 200 angeordnet zu werden.

Hierzu ist vorgesehen, dass das Flügelelement 10 als ein beidseitiger Schalter ausgeführt ist, um mindestens eine Betätigungshandlung B1, B2 eines Benutzers 300, insbesondere eine Berührung, vorzugsweise eine Zugbewegung B1 und/oder eine Druckbewegung B2, zu erfassen.

Vorzugsweise ist das Flügelelement 10 als ein beidseitiger Schalter ausgeführt, um unterschiedliche Betätigungshandlungen B1, B2 eines Benutzers 300, umfassend eine Zugbewegung B1 und/oder eine Druckbewegung B2, zu erfassen.

Eine Zugbewegung B1 kann dazu dienen, um das bewegliche Teil 201 zu entriegeln und/oder zu öffnen.

Eine Druckbewegung B2 kann dazu dienen, um das bewegliche Teil 201 zu schließen und/oder zu verriegeln.

In einer vorteilhaften Ausführung kann das Flügelelement 10 ein Kommunikationselement NFC, insbesondere in Form einer NFC-Antenne, aufweisen.

Wie es die Fig. 3 und 4 verdeutlichen, kann die Betätigungsvorrichtung 100 ferner aufweisen:
- eine Trägereinheit 20 für das Flügelelement 10,
   wobei die Trägereinheit 20 dazu ausgeführt sein kann, von innen an dem beweglichen Teil 201 des Fahrzeuges 200 angeordnet zu werden.

Vorteile im Hinblick auf einen gesparten Bauraum und eine vereinfachte Montage können sich dadurch ergeben, dass die Trägereinheit 20 eine Hauptelektronikeinheit E2 mit einer Auswerteeinheit E2(NFC) für das Kommunikationselement NFC aufnimmt, um einen Authentifizierungsvorgang ID durch die benutzerseitige Vorrichtung 301 mit einem Benutzer 300 durchzuführen.

Die Erfindung sieht vor, dass ein, insbesondere feststehendes, Flügelelement 10 von außen an dem beweglichen Teil 201 des Fahrzeuges 200 angeordnet wird.

Vorteilhafterweise kann dabei sämtliche vorteilhafte Sensorik S1, S2 sowie eine erste Elektronikeinheit E1, umfassend eine Sensorauswerteelektronik E1(S1), E1(S2), im Flügelelement 10 angeordnet sein, um erweiterte Funktionen am Fahrzeug 200 bzw. am Zugangssystem 110 bereitzustellen.

Die Funktionen können zum Betätigen (umfassend vorzugsweise: Entriegeln und/oder Öffnen und/oder ggf. Schließen und/oder Verriegeln) des, insbesondere grifflosen, beweglichen Teils 201 des Fahrzeuges 200 dienen.

Gemäß der Erfindung wird das Flügelelement 10 als ein beidseitiger Schalter ausgeführt, der sowohl von außen (bspw. durch einen Druck von einer Außenseite 11.2 am Flügelelement 10), als auch von innen (bspw. durch einen Zug 11.1 von einer Innenseite 11.1 am Flügelelement 10) betätigt werden kann. Durch die Betätigung des beidseitigen Schalters können vielfältige Funktionen am Fahrzeug bzw. des Zugangssystems ausgelöst werden, wie z. B. das Ver- oder Entriegeln sowie das Öffnen oder Schließen des beweglichen Teils 201 des Fahrzeuges 200.

Wie es die Fig. 4 andeutet, können für den beidseitigen Schalter bspw. 4 LDC-Sensoren bzw. induktive Sensoreinheiten S1 verwendet werden. Bei einer Druckbewegung von außen auf dem Flügelelement 10 können alle 4 induktive Sensoreinheiten S1 die von außen auf die Außenschale 11.2 einwirkende Druckkraft in Richtung zum Fahrzeug erfassen. Bei einer Zugbewegung an der Innenseite des Flügelelements 10 nach außen, weg vom Fahrzeug 200, kann ebenfalls diese Zugkraft von allen 4 induktiven Sensoreinheiten S1 erfasst werden.

In dem dargestellten Beispiel der Fig. 4 sind 3 induktive Sensoreinheiten S1 an einer Innenseite des Flügelelements 10, die zum Fahrzeug 200 ausgerichtet sind, angeordnet. Dabei ist 1 induktive Sensoreinheit S1 an einer Außenseite des Flügelelements 10, die weg vom Fahrzeug 200 ausgerichtet ist, angeordnet.

Wie es die Fig. 4 andeutet, können vorzugsweise unterschiedliche Anzahlen an induktiven Sensoreinheiten S1 an einer Innenseite und an einer Außenseite des Flügelelements 10 angeordnet sein, um eine Druckbewegung (z. B.: 1 Signal wird stärker, 3 werden schwächer) von einer Zugbewegung (z. B.: 3 Signale werden stärker, 1 Signal wird schwächer) eindeutig zu unterscheiden.

Im Inneren des Flügelelements 10 kann vorteilhafterweise eine erste Elektronikeinheit E1 an einer (vorzugsweise beidseitig bestückten) ersten Leiterplatte PCB1 angeordnet sein.

Auf der ersten Leiterplatte PCB1 können bspw. 4 Spulen bzw. Schaltkreise für induktive Sensoreinheiten S1 aufgebracht sein, z. B. drucktechnisch.

Die induktiven Sensoreinheiten S1 können über 4 Aktivierungselemente T (sog. Targets, bspw. aus Metall) betätigt werden, die an Gehäuseschalen (Gehäuseteilen 11.1, 11.2) vom Wing angeordnet sein können.

Die Gehäuseteile 11.1, 11.2 können beweglich an einer Trägerplatte 12 angeordnet sein. Dadurch können die Gehäuseteile 11.1, 11.2 flexible und/oder nachgiebige und/oder drückbare Aufnahmeelemente am feststehenden Flügelelement 10 bilden, um eine Aufnahme einer Zugbewegung und/oder einer Druckbewegung zu ermöglichen.

Zur Abdichtung der Gehäuseteile 11.1, 11.2 können Membranen vorgesehen sein, die das Innere des Flügelelementes 10 abdichten. Ferner können Schaumpads zur Rückstellung der Gehäuseteile 11.1, 11.2 nach einer Betätigung und zur Abdichtung des Flügelelementes 10 vorgesehen sein.

Das Flügelelement 10 selbst, insbesondere seine zwischen den Gehäuseteilen 11.1, 11.2 innenliegende Trägerplatte 12, bleibt feststehend. Die Gehäuseteile 11.1, 11.2 des Wings, die beweglich und/oder rückstellbar an der Trägerplatte 12 angeordnet sind, dienen zur Befestigung der Aktivierungselemente T bzw. der Targets für die induktiven Sensoreinheiten S1 und zur Aufnahme einer Zugbewegung und/oder einer Druckbewegung.

Ferner kann vorgesehen sein, dass eine Trägereinheit 20 für das Flügelelement 10 von innen an dem beweglichen Teil 201 des Fahrzeuges 200 angeordnet wird.

Auf diese Weise kann ein Spalt S für die Montage der Betätigungsvorrichtung 100 sehr schmal gehalten werden. Zugleich kann eine einfache und bequeme Montage der Betätigungsvorrichtung 100 ermöglicht werden, die das äußere Bild und die aerodynamischen Eigenschaften des Fahrzeuges 200 nicht beeinträchtigt.

Vorteilhafterweise kann die Montage der Betätigungsvorrichtung 100 in zwei Schritten erfolgen. Zu diesem Zweck kann die Betätigungsvorrichtung 100 zweiteilig aufgebaut sein, mit einem oberen Teil, nämlich dem Flügelelement 10 und einem unteren Teil, nämlich der Trägereinheit 20, an der weitere Mechanik, Elektrik und Elektronik angeordnet werden können. Das obere und das untere Teil der Betätigungsvorrichtung 100 können nach der Anordnung am Fahrzeug mechanisch und elektrisch miteinander verbunden werden.

Im ersten Schritt bei der Montage kann das obere Teil der Betätigungsvorrichtung 100 von außen an der Tür angeordnet und ggf. an einem Türblatt befestigt werden.

Der zweite Schritt bei der Montage kann vom Türinnenraum (also aus dem Inneren des Fahrzeuges 200, vorzugsweise durch eine haptisch geführte sog. Blindmontage) vorgenommen werden, wobei das untere Teil an das obere, ggf. bereits befestigte, Teil montiert wird. Vorteilhafterweise können für eine einfache (haptisch spürbare) Montage aneinander komplementäre Führungsteile an dem oberen und an dem unteren Teil vorgesehen sein. Die beiden zusammengefügten Teile können ferner miteinander befestigt werden. Weiterhin kann noch ein vormontiertes Kabel 13 mit einem Stecker, welches am oberen Teil zunächst gehalten werden kann, mit einer Buchse 27 im unteren Teil verbunden werden, um somit die elektrischen und/oder elektronischen Komponenten im oberen Teil mit der Hauptelektronikeinheit E2 im unteren Teil zu verbinden.

Die Erfindung sieht zum anderen vor, dass das Kommunikationselement NFC, insbesondere in Form einer NFC-Antenne, beabstandet zur seiner Auswerteeinheit E2(NFC) angeordnet wird.

Um das Bereitstellen und das Auswerten von Kommunikationssignalen (bspw. zwecks NFC-Kommunikation) durch eine räumliche Beabstandung zwischen dem Kommunikationselement NFC und der Auswerteeinheit E2(NFC) vor Störungen zu schützen, kann das Kabel 13 zwischen den Anschlüssen am Kommunikationselement NFC und den Anschlüssen an der Auswerteeinheit E2(NFC) zwei verdrillte Adern aufweisen.

Durch eine Verdrillung von Adern kann eine Ausbildung von parasitären Induktionseffekten auf eine einfache und effiziente Weise unterbrochen werden, sodass die NFC-Kommunikation trotz der räumlichen Beabstandung zwischen dem Kommunikationselement NFC und der Auswerteeinheit E2(NFC) zuverlässig durchgeführt werden kann.

Das Kommunikationselement NFC und seine Auswerteeinheit E2(NFC) können ein (räumlich zwar verteiltes, aber funktional zusammenhängendes) NFC-Modul bilden, welches dazu dienen kann, einen Authentifizierungsvorgang ID durch (oder mit) einer benutzerseitigen Vorrichtung 301 von einem Benutzer 300 durchzuführen, vgl. hierzu die Fig. 3.

Dabei kann die NFC-Antenne an dem oberen Teil, nämlich dem Flügelelement 10 angeordnet werden. Um dort einen Bauraum für die Auswerteeinheit E2(NFC) zu sparen, kann die Auswerteeinheit E2(NFC) im unteren Teil, nämlich der Trägereinheit 20 angeordnet werden. Die NFC-Antenne kann über ein Kabel 13, vorzugsweise ein Twist-Kabel mit 2 verdrillten Leitungen bzw. Adern, elektrisch mit der Auswerteeinheit E2(NFC) verbunden werden, vgl. hierzu Fig. 3 und 4.

Ferner zeigt die Fig. 4, dass das Flügelelement 10 eine Sensorvorrichtung S1, S2 aufweisen kann, welche dazu ausgeführt ist, eine Annäherung H und/oder mindestens eine Betätigungshandlung B1, B2 eines Benutzers 300 zu erfassen. Eine Annäherung H und/oder zwei unterschiedliche Betätigungshandlungen B1, B2, umfassend Drücken und Ziehen am Flügelelement 10, sind in der Fig. 3 angedeutet.

Ein folgendes Szenario ist gemäß den Fig. 3 und 4 denkbar: Ein Benutzer 300 nähert sich dem Fahrzeug 200. Zunächst kann am Flügelelement 10 ein Erfassen einer Annäherung H des Benutzers 300 durchgeführt werden. Daraufhin kann ein Authentifizierungsvorgang ID mit dem Benutzer 300 eingeleitet werden. Alternativ kann zuerst ein Authentifizierungsvorgang ID mit dem Benutzer 300 durchgeführt werden, um die Sensorvorrichtung S1, S2 zum Erfassen einer Annäherung H des (berechtigten) Benutzers 300 zu aktivieren. Nach einem Erfassen einer Annäherung H und/oder nach einem positiven Authentifizierungsvorgang ID kann das bewegliche Teil 201 entriegelt werden. Nach einem Erfassen einer Annäherung H und/oder einem positiven Authentifizierungsvorgang ID kann ein Erfassen einer Betätigungshandlung B1, B2 eines Benutzers 300 am Flügelelement 10 durchgeführt werden. Nach einer erfassten Betätigungshandlung B1, B2 eines Benutzers 300, bspw. durch Ziehen, am Flügelelement 10 kann vorteilhafterweise ein Öffnungsvorgang des beweglichen Teils 201 eingeleitet werden.

Wie es die Fig. 4 zeigt, kann das Flügelelement 10 eine Sensorauswerteelektronik E1 mit einer Sensorauswerteeinheit E1(S1, S2) für die Sensorvorrichtung S1, S2 aufweisen. Auf diese Weise kann eine vergleichsweise nahe Positionierung der Sensorauswerteeinheit E1(S1, S2) an der Sensorvorrichtung S1, S2 innerhalb des Flügelelementes 10 ermöglicht werden, um verbesserte kapazitive und/oder induktive Messungen durchführen zu können.

Des Weiteren zeigt die Fig. 4, dass die Sensorvorrichtung S1, S2 eine erste Sensoreinheit S1, insbesondere in Form einer induktiven Sensoreinheit (umfassend zwei, drei, vier oder mehrere LDC-Sensoren), aufweist. Die LDC-Sensoren können auf unterschiedlichen Seiten einer ersten Leiterplatte PCB1 angeordnet sein. Die erste Sensoreinheit S1 kann dazu ausgeführt sein, mindestens eine Betätigungshandlung B1, B2 des Benutzers 300 zu erfassen. Die Betätigungshandlung B1, B2 kann insbesondere eine berührungsbehaftete Betätigungshandlung B1, B2 sein, vorzugsweise in Form einer Zugbewegung (in die Öffnungsrichtung des beweglichen Teils 201) und/oder einer Druckbewegung (in die Schließrichtung des beweglichen Teils 201) am Flügelelement 10. Auf diese Weise können leichte Berührungen am Flügelelement 10 durch eine Hand eines Benutzers 300 sensitiv (d. h. hochaufgelöst) erfasst werden. Damit können unterschiedliche Betätigungshandlungen B1, B2, bspw. durch Drücken oder Ziehen, am Flügelelement 10 erfasst werden, die einfach und bequem sowie ohne großen Kraftaufwand durchgeführt werden können und die eine fließende Betätigung des beweglichen Teils 201 ermöglichen können.

Mithilfe der ersten Sensoreinheit S1 kann vorteilhafterweise ein beidseitiger Schalter am Flügelelement 10 bereitgestellt werden, der sowohl von außen durch einen Druck, als auch von innen durch einen Zug betätigt werden kann. Durch unterschiedliche Betätigungshandlungen B1, B2 können unterschiedliche Vorgänge am beweglichen Teil 201 eingestellt werden, wie z. B. Ver- oder Entriegeln sowie Öffnen oder Schließen.

Darüber hinaus zeigt die Fig. 4, dass die Sensorvorrichtung S1, S2 eine zweite Sensoreinheit S2, insbesondere in Form einer kapazitiven Sensoreinheit, aufweisen kann, um eine Annäherung H des Benutzers 300 zum Flügelelement 10 zu erfassen. Dadurch können berührungslose Betätigungshandlungen in Form einer Annäherung H erfasst werden.

Ein folgendes Szenario ist gemäß den Fig. 3 und 4 denkbar: Die erfasste Annäherung H des Benutzers 300 kann dazu dienen, um einen Authentifizierungsvorgang ID zu starten und/oder eine erste Sensoreinheit S1, insbesondere in Form einer induktiven Sensoreinheit, zu aktivieren. Grundsätzlich ist es denkbar, dass zunächst ein Authentifizierungsvorgang ID durchgeführt werden kann und danach die zweite Sensoreinheit S2 und/oder die erste Sensoreinheit S1 aktiviert werden können/kann.

Ein Entriegeln des beweglichen Teils 201 kann vorzugsweise nach einem Erfassen einer Annäherung H und/oder einem positiven Authentifizierungsvorgang ID eingeleitet werden.

Ein Öffnen des beweglichen Teils 201 kann vorzugsweise nach einem Erfassen einer Zugbewegung (in die Öffnungsrichtung des beweglichen Teils 201) am Flügelelement 10 eingeleitet werden.

Ein Schließen des beweglichen Teils 201 kann vorzugsweise nach einem Erfassen einer Druckbewegung (in die Schließrichtung des beweglichen Teils 201) am Flügelelement 10 eingeleitet werden.

Ein Verriegeln des beweglichen Teils 201 kann bspw. nach einer Betätigung eines berührungsbehafteten Sensors an der Sensorvorrichtung S1, S2 und vorzugsweise auch einem Erfassen einer Entfernung eines Benutzers 300 vom Fahrzeug 200 eingeleitet werden. Wie es die Fig. 3 und 4 andeuten, ist es grundsätzlich denkbar, dass das Flügelelement 10 an einem Spalt S zwischen dem beweglichen Teil 201 und einer beweglichen Fensterscheibe 202 des Fahrzeuges 200 oder an einem Spalt S zwischen dem beweglichen Teil 201 und einem Karosserieelement 203 des Fahrzeuges 200 angeordnet werden kann.

Wie es die Fig. 3 und 4 verdeutlichen, kann das Flügelelement 10 dazu ausgeführt sein, beabstandet zur Trägereinheit 20 angeordnet zu werden. Auf diese Weise kann der begrenzte und oft verteilte Bauraum am Fahrzeug effektiv ausgenutzt werden. Ebenfalls kann das Kommunikationselement NFC am Flügelelement 10 und die Auswerteeinheit E2(NFC) für das Kommunikationselement NFC beabstandet zueinander angeordnet sein, insbesondere in einem Abstand von mindestens 5 cm, 10 cm, oder mehr. Um sicherzustellen, dass eine Kommunikation zwecks Authentifizierung nicht beinträgt wird, kann zwischen dem Kommunikationselement NFC am Flügelelement 10 und der Auswerteeinheit E2(NFC) für das Kommunikationselement NFC an der Trägereinheit 20 ein zwei adriges Kabel 13 mit verdrillten Adern vorgesehen sein.

Ferner deutet die Fig. 4 an, dass das Flügelelement 10 ein Gehäuse 11 aufweist, das dazu ausgeführt ist, eine erste Leiterplatte PCB1 für die Sensorvorrichtung S1, S2, die Sensorauswerteelektronik E1, die Kommunikationselement NFC und/oder eine Beleuchtungseinheit L1 aufzunehmen. Das Gehäuse 11 kann vorzugsweise mehrteilig ausgeführt sein, bspw. aufweisend:
- ein erstes Gehäuseteil 11.1 bzw. eine erste Gehäuseschale (Innenschale), welche(s) in einer Gebrauchsposition am Fahrzeug 200 zu einem Innenraum des Fahrzeuges 200 ausgerichtet werden kann,
- ein zweites Gehäuseteil 11.2 bzw. eine zweite Gehäuseschale (Außenschale), welche(s) in einer Gebrauchsposition am Fahrzeug 200 nach außen ausgerichtet werden kann, und/oder
- ein drittes Gehäuseteil 11.3 (Kappe), welches vorzugsweise dazu ausgeführt sein kann, das Gehäuse 10 nach einer Befestigung am vorgesehen Montageort zu verschließen.

Wie es die Fig. 4 verdeutlicht, kann das Gehäuse 11 eine Dichtung 14 zwischen den Gehäuseteilen 11.1, 11.2, 11.3 aufweisen, um einen Innenraum des Gehäuses 11 abzudichten. Die Dichtung 14 kann bspw. in Form einer Membran ausgebildet sein.

Die Dichtung 14 kann zwischen mehreren Gehäuseteilen 11.1, 11.2, 11.3 angeordnet sein, um einen Innenraum des Gehäuses 11 abzudichten. Die Dichtung 11.1, 11.2, 11.3 kann mehrere Gehäuseteile 11.1, 11.2, 11.3 umfangsseitig umschließen, um einen Innenraum des Gehäuses 11 abzuschließen.

Ferner kann vorgesehen sein, dass die Dichtung 14 stoffschlüssig (bspw. durch Kleben) und/oder formschlüssig und/oder kraftschlüssig (bspw. durch Verrasten und/oder Verklemmen) mit dem Gehäuse 11, insbesondere mit mehreren Gehäuseteilen, verbunden ist.

Das erste Gehäuseteil 11.1 kann mindestens ein, zwei, drei, vier oder mehrere Aktivierungselemente T (sog. Targets) aufweisen (dargestellt in der Fig. 4 sind bspw. 3 Targets am ersten Gehäuseteil 11.1), um eine erste Betätigungshandlung (B1), bspw. in Form einer Zugbewegung am Flügelelement 10, aufzunehmen, die bspw. zum Entriegeln und/oder Öffnen des beweglichen Teils 201 dienen kann.

Das zweite Gehäuseteil 11.2 kann mindestens ein, zwei, drei, vier oder mehrere Aktivierungselemente T (sog. Targets) aufweisen (dargestellt in der Fig. 4 ist bspw. 1 Target am zweiten Gehäuseteil 11.2), um eine zweite Betätigungshandlung B2, insbesondere in Form einer Druckbewegung am Flügelelement 10, aufzunehmen, die bspw. zum Schließen und/oder Verriegeln des beweglichen Teils 201 dienen kann.

Vorzugsweise kann ein erstes Gehäuseteil 11.1 (Innenschale) und ein zweites Gehäuseteil 11.2 (Außenschale) des Gehäuses 11 eine unterschiedliche Anzahl an Aktivierungselementen T (sog. Targets) aufweisen, um eine erste Betätigungshandlung B1, insbesondere in Form einer Zugbewegung B1, von einer zweiten Betätigungshandlung B2, insbesondere in Form einer Druckbewegung B2, am Flügelelement 10 eindeutig zu unterscheiden.

Wie es die Fig. 4 andeutet, können 3 Aktivierungselemente T an einer Innenschale des Gehäuses 11, die zum Fahrzeug 200 ausgerichtet ist, angeordnet sein. Bspw. kann 1 Aktivierungselement an einer Außenschale des Gehäuses 11, die weg von vom Fahrzeug 200 ausgerichtet ist, angeordnet sein.

Die Fig. 4 deutet somit an, dass unterschiedliche Anzahlen an Aktivierungselementen T an einer Innenschale und an einer Außenschale des Gehäuses 11 angeordnet sein können, um eine Druckbewegung B2 (z. B.: 1 Signal wird stärker beim Drücken an der Außenseite, 3 werden schwächer an der Innenseite) von einer Zugbewegung B1 (z. B.: 3 Signale werden stärker beim Ziehen an der Innenseite, 1 Signal wird schwächer an der Außenseite) zu unterscheiden.

Die Aktivierungselemente T können elektrisch leitend ausgeführt sein, um beim Bewegen des Gehäuses 10 relativ zur Trägerplatte 12 ein induktives Signal in der Sensorvorrichtung S1, S2 zu erzeugen.

Zudem deutet die Fig. 4 an, dass das Flügelelement 10 eine Trägerplatte 12 aufweisen kann, die dazu dient, eine erste Leiterplatte PCB1 für die Sensorvorrichtung S1, S2, die Sensorauswerteelektronik E1, das Kommunikationselement NFC und eine Beleuchtungseinheit L1 abzustützen, und das Gehäuse 11 des Flügelelementes 10 beweglich relativ zur Trägerplatte 12 zu lagern.

Wie es die Fig. 4 verdeutlicht, kann das Flügelelement 10 ein Rückstellelement 15, bspw. in Form eines Schaumpads und/oder einer Rückstellfeder, für das Gehäuse 11 aufweisen, um bevorzugt das Gehäuse 11 des Flügelelementes 10 nach einer Aufnahme mindestens einer Betätigungshandlung B1, B2 des Benutzers 300 relativ zur Trägerplatte 12 in eine Ruheposition zurückzustellen. Auch kann das Rückstellelement 15 dazu beitragen, um einen Innenraum des Gehäuses 11 abzuschließen und/oder abzudichten.

Das Rückstellelement 15 kann an der Trägerplatte 12 abgestützt sein. Bspw. kann das Rückstellelement 15 stoffschlüssig (bspw. durch Kleben) und/oder formschlüssig und/oder kraftschlüssig (bspw. durch Verrasten und/oder Verklemmen) an der Trägerplatte 12 befestigt sein.

Außerdem deuten die Fig. 3 und 4 an, dass am Flügelelement 10 ein, vorzugsweise vormontiertes, Kabel 13 mit einem Stecker vorgesehen sein kann, um eine erste Leiterplatte PCB1 im Flügelelement 10 an eine zweite Leiterplatte PCB2 in der Trägereinheit 20 elektrisch, datentechnisch und/oder kommunikationstechnisch anzuschließen. Dies kann bspw. geschehen nachdem (erstens) das Flügelelement 10 von außen am beweglichen Teil 201 des Fahrzeuges 200 angeordnet wurde und nachdem (zweitens) die Trägereinheit 20 von innen am beweglichen Teil 201 des Fahrzeuges 200 angeordnet wurde und vorzugsweise nachdem (drittens) die Trägereinheit 20 am Flügelelement 10 befestigt wurde.

Außerdem deuten die Fig. 3 und 4 an, dass das Flügelelement 10 eine Beleuchtungseinheit L1, insbesondere in Form einer LED-Einheit mit einer oder mehreren LEDs, aufweisen kann. Die Beleuchtungseinheit L1 kann dazu dienen, die Betätigungsvorrichtung 100 für eine Betätigung sichtbar zu machen, um eine Ambientebeleuchtung des Flügelelements 10 bereitzustellen, und/oder um eine Betätigung der Betätigungsvorrichtung 100 zu erleichtern. Die Beleuchtungseinheit L1 kann ferner durch Ihre Leuchtweise dem Benutzer 300 eine Rückmeldung bei der Betätigung geben. Ferner kann die Beleuchtungseinheit L1 den Benutzer warnen, um einen Stoßschutz und/oder Klemmschutz bereitzustellen.

Ferner deuten die Fig. 3 und 4 an, dass die Sensorauswerteelektronik E1 eine erste Sensorauswerteeinheit E1(S1) für eine erste Sensoreinheit S1, insbesondere in Form einer induktiven Sensoreinheit, aufweisen kann. Weiterhin kann die Sensorauswerteelektronik E1 eine zweite Sensorauswerteeinheit E1(S2) für eine zweite Sensoreinheit S2, insbesondere in Form einer kapazitiven Sensoreinheit, aufweisen.

Weiterhin deuten die Fig. 3 und 4 an, dass das Flügelelement 10 einen ersten Montageträger M1 aufweisen kann. Der erste Montageträger M1 kann dazu ausgeführt sein, um das Flügelelement 10 von außen am beweglichen Teil 201 des Fahrzeuges 200, bevorzugt form- und/oder kraftschlüssig, bspw. mithilfe einer Schraubverbindung, zu befestigen. Der erste Montageträger M1 kann alternativ oder zusätzlich dazu ausgeführt sein, um das Flügelelement 10 an einem zweiten Montageträger M2 der Trägereinheit 20 zu befestigen.

Zudem deutet die Fig. 4 an, dass das Flügelelement 10, insbesondere der erste Montageträger M1, und die Trägereinheit 20, insbesondere der zweite Montageträger M2 derart ausgebildet sein können, dass die Sensorauswerteelektronik E1, insbesondere die erste Leiterplatte PCB1, und die Hauptelektronikeinheit E2, insbesondere die zweite Leiterplatte PCB2 versetzt zueinander, bspw. um 90°, angeordnet sein können.

Dadurch, dass die Erstreckungsebene der ersten Leiterplatte PCB1 bzw. des Flügelelementes 10 versetzt zur Erstreckungsebene der zweiten Leiterplatte PCB2 bzw. der Trägereinheit 20 angeordnet ist, ist das Flügelelement 10 in der Fig. 4 im Schnitt durch die erste Leiterplatte PCB1 und die Trägereinheit 20 in einer Draufsicht auf die zweite Leiterplatte PCB2 dargestellt.

Ferner deutet die Fig. 4 an, dass die Trägereinheit 20 ein Gehäuse 21 aufweisen kann, das dazu ausgeführt ist, eine zweite Leiterplatte PCB2 für die Hauptelektronikeinheit E2, eine Antriebseinheit 22 für eine Entkoppelungseinheit 23, die Entkoppelungseinheit 23, ein Verbindungselement 24 und/oder ein Notentriegelungsmechanismus 25, 26 aufzunehmen.

Wie es die Fig. 4 schematisch andeutet, kann die Trägereinheit 20 eine Antriebseinheit 22 für eine Entkoppelungseinheit 23 und die Entkoppelungseinheit 23 selbst aufweisen, wobei die Entkoppelungseinheit 23 dazu ausgeführt sein kann, eine mechanische Verbindung zwischen dem Flügelelement 10 und der Trägereinheit 20 zu lösen, insbesondere wenn die Hauptelektronikeinheit E2 und/oder die Sensorauswerteelektronik E1 ein fahrzeugseitiges Crashsignal empfangen hat. Die Antriebseinheit 22 kann die Entkoppelungseinheit 23 entsprechend ansteuern, um eine Notentriegelung bereitzustellen. Auf diese Weise kann den Rettungskräften die Betätigung des beweglichen Teils 201 ermöglicht werden, sogar dann, wenn die Fahrzeugelektronik ausfällt. Zur Betätigung des beweglichen Teils 201 kann das Flügelelement 10 wieder beweglich gemacht werden (bspw. schwenkbar und/oder drehbar um ein Verbindungselement24), um mechanisch, bspw. über einen Bowdenzug, das Schloss 130 zu betätigen.

Wie es die Fig. 4 andeutet, kann die Trägereinheit 20 ein Verbindungselement 24, insbesondere in Form einer Verbindungsachse, aufweisen, um das Flügelelement 10 bewegbar, bspw. schwenkbar und/oder drehbar, an der Trägereinheit 20 zu halten. Dies kann vorteilhaft sein, wenn eine mechanische Verbindung zwischen dem Flügelelement 10 und der Trägereinheit 20 gelöst wurde, bspw. wenn vom Fahrzeug ein Crashsignal empfangen und das Flügelelement 10 bewegt werden kann, um eine Notentriegelung zu ermöglichen.

Weiterhin deutet die Fig. 4 an, dass die Trägereinheit 20 einen Hebel 25 für einen Bowdenzug 26 und den Bowdenzug 26 aufweisen kann, um einen Notentriegelungsmechanismus 25, 26 im Crashfall bereitzustellen. Die Notentriegelung kann vorteilhafterweise mithilfe des Flügelelementes 10 bereitgestellt werden, welches bewegbar, bspw. schwenkbar und/oder drehbar, relativ zu der Trägereinheit 20 betätigt werden kann, um ein elektromechanisches Schloss 130 des Fahrzeuges 200 zu betätigen, insbesondere zum Entriegeln und/oder Öffnen, vorzugsweise sogar dann, wenn die Fahrzeugelektronik ausfällt.

Des Weiteren deutet die Fig. 4 an, dass die Trägereinheit 20 eine (bspw. angeformte) Buchse 27 für einen Stecker am Kabel 13 aufweisen kann, um eine erste Leiterplatte PCB1 im Flügelelement 10 an eine zweite Leiterplatte PCB2 in der Trägereinheit 20 elektrisch, datentechnisch und/oder kommunikationstechnisch anzuschließen. Dies kann bspw. geschehen, nachdem (erstens) das Flügelelement 10 von außen am beweglichen Teil 201 des Fahrzeuges 200 angeordnet wurde und nachdem (zweitens) die Trägereinheit 20 von innen am beweglichen Teil 201 des Fahrzeuges 200 angeordnet wurde und vorzugsweise nachdem (drittens) die Trägereinheit 20 am Flügelelement 10 befestigt wurde.

Darüber hinaus deutet die Fig. 4 an, dass die Trägereinheit 20, insbesondere das Gehäuse 21 der Trägereinheit 20, eine (bspw. angeformte) Buchse 28 aufweisen kann, um die Betätigungsvorrichtung 100 elektrisch, datentechnisch und/oder kommunikationstechnisch mit einer fahrzeugseitigen Steuervorrichtung 120 zu verbinden.

Wie es die Fig. 4 weiter andeutet, können/kann die Buchse 28 eine Kommunikationsschnittstelle E3 zu einer fahrzeugseitigen Steuervorrichtung 120 aufweisen.

Die Sensorauswerteelektronik E1 und/oder die Hauptelektronikeinheit E2 können/kann ferner eine Kommunikationsschnittstelle E3 zu einer fahrzeugseitigen Steuervorrichtung 120 aufweisen.

Die fahrzeugseitige Steuervorrichtung 120 kann bspw. zum Betätigen des Schlosses 130 ausgeführt sein.

Die Hauptelektronikeinheit E2 kann ein Crashsignal von der fahrzeugseitigen Steuervorrichtung 120 erhalten. Die Sensorauswerteelektronik E1 kann mindestens ein Signal über den Zustand des Schlosses 130 von der fahrzeugseitigen Steuervorrichtung 120 erhalten.

Über die Kommunikationsschnittstelle E3 können Betätigungssignale (zum Betätigen des beweglichen Teils 201) von der Betätigungsvorrichtung 100 an die fahrzeugseitige Steuervorrichtung 120 gesendet werden.

Zudem deutet die Fig. 4 an, dass die Hauptelektronikeinheit E2 mit einer Steuereinheit E2(110) zum Bereitstellen von Steuersignalen für das Zugangssystem 110 ausgeführt sein kann, die dazu dienen können, um das bewegliche Teil 201 des Fahrzeuges 200 zu betätigen, insbesondere zu entriegeln und/oder zu öffnen und/oder zu schließen und/oder zu verriegeln.

Ferner deutet die Fig. 4 an, dass die Hauptelektronikeinheit E2 eine NFC-Messverarbeitungseinheit NFC1, eine NFC-Schnittstelle NFC2, insbesondere in Form eines NFC-Transceivers, enthalten kann.

Weiterhin deutet die Fig. 4 an, dass die Hauptelektronikeinheit E2 mindestens eine Kommunikationsschnittstelle KS zu einem Fahrzeugnetz aufweisen kann, bspw. umfassend eine CAN-Schnittstelle KS1 und/oder eine LIN-Schnittstelle KS2, und/oder dass die Hauptelektronikeinheit E2 eine Steuereinheit E2(CAN/LIN) für die mindestens eine Kommunikationsschnittstelle KS zu einem Fahrzeugnetz aufweisen kann.

Des Weiteren deutet die Fig. 4 an, dass die Hauptelektronikeinheit E2 eine Beleuchtungsschnittstelle L2, insbesondere in Form einer LED-Schnittstelle, aufweisen kann, und/oder dass die Hauptelektronikeinheit E2 eine Steuereinheit E2(LED) für eine Beleuchtung aufweisen kann.

Nicht dargestellt in den Figuren aber zugleich denkbar ist, dass die Sensorvorrichtung S1, S2 mindestens ein Radar-Sensorelement, ein UWB-Sensorelement, insbesondere umfassend ein Pulsradar- oder ein Dauerstrichradar-Messverfahren, und/oder ein Piezo-Sensorelement aufweisen kann. Ein Radar-Sensorelement kann bspw. zum Erfassen einer Annäherung und/oder zum Bereitstellen eines Stoß- und/oder Klemmschutzes, z. B. anstelle einer kapazitiven Sensoreinheit, dienen. Ein UWB-Sensorelement kann bspw. zum Erfassen von unterschiedlichen berührungslosen Betätigungshandlungen dienen, die z. B. unterschiedliche Bewegungsrichtungen aufweisen können. Ein Piezo-Sensorelement kann bspw. zum Erfassen einer Berührung dienen, z. B. zum Verriegeln des beweglichen Teils.

Vorzugsweise kann die erste Elektronikeinheit / Sensorauswerteelektronik E1 dazu ausgeführt sein, die Sensorvorrichtung S1, S2, zum Erfassen eines Hindernisses im Bewegungsbereich des beweglichen Teiles 201, bspw. mithilfe einer Detektion, z. B. einer kapazitiven Detektion und/oder einer Radar-Detektion, anzusteuern. Vorteilhafterweise kann die erste Elektronikeinheit / Sensorauswerteelektronik E1 dazu ausgeführt sein, ein Warnsignal und/oder ein Stoppsignal bereitzustellen, wenn die Sensorvorrichtung S1, S2 ein Hindernis im Bewegungsbereich des beweglichen Teiles 201 erfasst hat.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen.

### Bezugszeichenliste

- 100: Betätigungsvorrichtung

- 10: Flügelelement
- 11: Gehäuse von 10
- 11.1: Gehäuseteil, Deckel
- 11.2: Gehäuseteil, Körper
- 11.3: Gehäuseteil, Kappe
- 12: Trägerplatte
- 13: Kabel mit Stecker zur PCB2
- 14: Dichtung
- 15: Rückstellelement

- PCB1: erste Leiterplatte

- NFC: Kommunikationselement, NFC-Antenne

- S1, S2: Sensorvorrichtung
- S1: erste(r) Sensoreinheit/Schaltkreis, induktive(r) Sensoreinheit/Schaltkreis
- S2: erste(r) Sensoreinheit/Schaltkreis, kapazitive(r) Sensoreinheit/Schaltkreis

- T: Aktivierungselement

- L1: Beleuchtungseinheit, LED-Einheit

- E1: erste Elektronikeinheit/Sensorauswerteelektronik an 10, aufweisend:
- E1(S1): Sensorauswerteeinheit für S1
- E1(S2): Sensorauswerteeinheit für S2

- M1: Montageträger

- S: Spalt
- 20: Trägereinheit
- 21: Gehäuse von 20
- 22: Antriebseinheit
- 23: Entkoppelungseinheit
- 24: Verbindungselement, Verbindungsachse
- 25: Hebel für Bowdenzug
- 26: Bowdenzug
- 27: Buchse für den Stecker am Kabel 13 zur PCB1
- 28: Buchse zum Fahrzeug
- E3: Schnittstelle zu 120

- PCB2: zweite Leiterplatte

- NFC1: NFC-Messverarbeitungseinheit
- NFC2: NFC-Schnittstelle, NFC-Transceiver

- KS: Kommunikationsschnittstelle, CAN/LIN-Schnittstelle
- KS1: CAN-Schnittstelle
- KS2: LIN-Schnittstelle

- L2: Beleuchtungsschnittstelle, LED-Schnittstelle

- E2: zweite Elektronikeinheit/Hauptelektronikeinheit, aufweisend:
- E2(NFC): Auswerteeinheit für Kommunikationselement, NFC-Antenne
- E2(CAN/LIN): Steuereinheit für Kommunikationsschnittstelle KS
- E2(110): Steuereinheit zum Bereitstellen eines Steuersignals zum Betätigen des Zugangssystems 110 bzw. des Schlosses 130 für die Steuervorrichtung 120
- E2(LED): Steuereinheit für Beleuchtung

- M2: Montageträger
- 110: Zugangssystem
- 120: Steuervorrichtung
- 130: Schloss

- 200: Fahrzeug
- 201: bewegliches Teil, Tür, Klappe
- 202: Fensterscheibe
- 203: Karosserieelement

- 300: Benutzer
- 301: benutzerseitige Vorrichtung (ID-Geber / Mobilfunktelefon / intelligente Uhr (mit Funkfunktion) oder dergleichen

- H: Annäherung,

- B1: Betätigungshandlung (erste), Zugbewegung
- B2: Betätigungshandlung (zweite), Druckbewegung

## Patentansprüche

1. Betätigungsvorrichtung (100) für ein Zugangssystem (110) eines Fahrzeuges (200) zum Betätigen, vorzugsweise Entriegeln und/oder Öffnen und ggf. Schließen und/oder Verriegeln, eines, insbesondere grifflosen, beweglichen Teils (201) des Fahrzeuges (200),
aufweisend ein, insbesondere feststehendes, Flügelelement (10),
wobei das Flügelelement (10) dazu ausgeführt ist, von außen an dem beweglichen Teil (201) des Fahrzeuges (200) angeordnet zu werden,
und wobei das Flügelelement (10) als ein beidseitiger Schalter ausgeführt ist, um mindestens eine Betätigungshandlung (B1, B2) eines Benutzers (300), insbesondere eine Berührung, vorzugsweise eine Zugbewegung (B1) und/oder eine Druckbewegung (B2), zu erfassen.

2. Betätigungsvorrichtung (100) nach Anspruch 1,
**dadurch gekennzeichnet,**
**dass** das Flügelelement (10) ein Kommunikationselement (NFC), insbesondere in Form einer NFC-Antenne, aufweist,
und/oder dass die Betätigungsvorrichtung (100) eine Trägereinheit (20) für das Flügelelement (10) aufweist, wobei die Trägereinheit (20) dazu ausgeführt ist, von innen an dem beweglichen Teil (201) des Fahrzeuges (200) angeordnet zu werden,
wobei insbesondere die Trägereinheit (20) eine Hauptelektronikeinheit (E2) mit einer Auswerteeinheit (E2(NFC)) für das Kommunikationselement (NFC) aufweist, um einen Authentifizierungsvorgang (ID) mit einem Benutzer (300) durchzuführen.

3. Betätigungsvorrichtung (100) nach Anspruch 1,
**dadurch gekennzeichnet,**
**dass** das Flügelelement (10) eine Sensorvorrichtung (S1, S2) aufweist, welche dazu ausgeführt ist, eine Annäherung (H) und/oder mindestens eine Betätigungshandlung (B1, B2) eines Benutzers (300), insbesondere eine Berührung, vorzugsweise eine Zugbewegung und/oder eine Druckbewegung, zu erfassen,
wobei das Flügelelement (10) eine Sensorauswerteelektronik (E1) mit einer Sensorauswerteeinheit (E1(S1, S2)) für die Sensorvorrichtung (S1, S2) aufweist.

4. Betätigungsvorrichtung (100) nach einem der vorhergehenden Ansprüche,
**dadurch gekennzeichnet,**
**dass** die Sensorvorrichtung (S1, S2) eine erste Sensoreinheit (S1), insbesondere in Form einer induktiven Sensoreinheit, aufweist, um mindestens eine Betätigungshandlung (B1, B2) des Benutzers (300), insbesondere eine Berührung, vorzugsweise eine Zugbewegung und/oder eine Druckbewegung, am Flügelelement (10) aufzunehmen,
und/oder dass die Sensorvorrichtung (S1, S2) eine zweite Sensoreinheit (S2), insbesondere in Form einer kapazitiven Sensoreinheit, aufweist, um eine Annäherung (H) des Benutzers (300) zum Flügelelement (10) zu erfassen,
und/oder dass das Flügelelement (10) dazu ausgeführt ist, am beweglichen Teil (201) in Form einer Tür oder einer Klappe des Fahrzeuges (200) angeordnet zu werden,
und/oder dass das Flügelelement (10) dazu ausgeführt ist, an einem Spalt (S) zwischen dem beweglichen Teil (201) und einer beweglichen Fensterscheibe (202) des Fahrzeuges (200) angeordnet zu werden,
und/oder dass das Flügelelement (10) dazu ausgeführt ist, an einem Spalt (S) zwischen dem beweglichen Teil (201) und einem Karosserieelement (203) des Fahrzeuges (200) angeordnet zu werden,
und/oder dass das Flügelelement (10) dazu ausgeführt ist, beabstandet zur Trägereinheit (20) angeordnet zu werden,
und/oder dass das Kommunikationselement (NFC) am Flügelelement (10) und die Auswerteeinheit (E2(NFC)) für das Kommunikationselement (NFC) beabstandet zueinander angeordnet sind, insbesondere in einem Abstand von mindestens 5 cm, 10 cm, oder mehr,
und/oder dass zwischen dem Kommunikationselement (NFC) am Flügelelement (10) und der Auswerteeinheit (E2(NFC)) für das Kommunikationselement (NFC) an der Trägereinheit (20) ein verdrilltes zwei adriges Kabel vorgesehen ist.

5. Betätigungsvorrichtung (100) nach einem der vorhergehenden Ansprüche,
**dadurch gekennzeichnet,**
**dass** das Flügelelement (10) ein Gehäuse (11) aufweist, das dazu ausgeführt ist, eine erste Leiterplatte (PCB1) für die Sensorvorrichtung (S1, S2), die Sensorauswerteelektronik (E1), das Kommunikationselement (NFC) und/oder eine Beleuchtungseinheit (L1) aufzunehmen,
wobei insbesondere das Gehäuse (11) mehrteilig ausgeführt ist, vorzugsweise aufweisend:
- ein erstes Gehäuseteil (11.1), welches in einer Gebrauchsposition am Fahrzeug (200) zu einem Innenraum des Fahrzeuges (200) ausgerichtet werden kann,
- ein zweites Gehäuseteil (11.2), welches in einer Gebrauchsposition am Fahrzeug (200) nach außen ausgerichtet werden kann, und/oder
- ein drittes Gehäuseteil (11.3), welches vorzugsweise dazu ausgeführt ist, das Gehäuse (10) nach einer Befestigung zu verschließen,
und/oder dass das Gehäuse (11) des Flügelelementes (10) eine Dichtung (14), bspw. in Form einer Membran, aufweist, um einen Innenraum des Gehäuses (11) abzuschließen und/oder abzudichten,
wobei insbesondere die Dichtung (14) zwischen mehreren Gehäuseteilen (11.1, 11.2, 11.3) angeordnet ist, um einen Innenraum des Gehäuses (11) abzudichten,
wobei vorzugsweise die Dichtung (14) umfangsseitig mehrere Gehäuseteile (11.1, 11.2, 11.3) umschließt, um einen Innenraum des Gehäuses (11) abzuschließen,
wobei bevorzugt die Dichtung (14) stoffschlüssig und/oder formschlüssig und/oder kraftschlüssig mit dem Gehäuse (11), insbesondere mit mehreren Gehäuseteilen (11.1, 11.2, 11.3), verbunden ist,
und/oder dass ein erstes Gehäuseteil (11.1) des Gehäuses (11) mindestens ein, zwei, drei, vier oder mehrere, insbesondere jedoch drei, Aktivierungselemente (T) aufweist, um eine erste Betätigungshandlung (B1), insbesondere in Form einer Zugbewegung am Flügelelement (10), aufzunehmen, die bspw. zum Entriegeln und/oder Öffnen des beweglichen Teils (201) dienen kann,
und/oder dass ein zweites Gehäuseteil (11.2) des Gehäuses (11) mindestens ein, zwei, drei, vier oder mehrere, insbesondere jedoch ein, Aktivierungselement(e) (T) aufweist, um eine zweite Betätigungshandlung (B2), insbesondere in Form einer Druckbewegung am Flügelelement (10), aufzunehmen, die bspw. zum Schließen und/oder Verriegeln des beweglichen Teils (201) dienen kann,
und/oder wobei ein erstes Gehäuseteil (11.1) und ein zweites Gehäuseteil (11.2) des Gehäuses (11) eine unterschiedliche Anzahl an Aktivierungselementen (T) aufweisen kann, um eine erste Betätigungshandlung (B1), insbesondere in Form einer Zugbewegung (B1), von einer zweiten Betätigungshandlung (B2), insbesondere in Form einer Druckbewegung (B2), am Flügelelement (10) eindeutig zu unterscheiden,
wobei insbesondere das und/oder die Aktivierungselement(e) (T) elektrisch leitend ausgeführt ist/sind, um beim Bewegen des Gehäuses (10) relativ zur Trägerplatte (12) ein induktives Signal in der Sensorvorrichtung (S1, S2) zu erzeugen.

6. Betätigungsvorrichtung (100) nach einem der vorhergehenden Ansprüche,
**dadurch gekennzeichnet,**
**dass** das Flügelelement (10) eine Trägerplatte (12) aufweist, die dazu ausgeführt ist, eine erste Leiterplatte (PCB1) für die Sensorvorrichtung (S1, S2), die Sensorauswerteelektronik (E1), das Kommunikationselement (NFC) und/oder eine Beleuchtungseinheit (L1) abzustützen
wobei insbesondere die Trägerplatte (12) in einer Einbausituation am Fahrzeug (200) unbeweglich relativ zum Fahrzeug (200) befestigbar ist.

7. Betätigungsvorrichtung (100) nach einem der vorhergehenden Ansprüche,
**dadurch gekennzeichnet,**
**dass** das Gehäuse (11) des Flügelelementes (10) beweglich relativ zu einer Trägerplatte (12) gelagert ist, um eine Aufnahme mindestens einer Betätigungshandlung (B1, B2) des Benutzers (300), insbesondere einer Berührung, vorzugsweise einer Zugbewegung und/oder einer Druckbewegung, zu ermöglichen,
wobei insbesondere das Gehäuse (11) des Flügelelementes (10) als ein flexibles und/oder nachgiebiges und/oder drückbares Aufnahmeelement am feststehenden Flügelelement (10) bildet, um eine Aufnahme mindestens einer Betätigungshandlung (B1, B2) des Benutzers (300), insbesondere einer Berührung, vorzugsweise einer Zugbewegung (B1) und/oder einer Druckbewegung (B2), zu ermöglichen,
und/oder dass das Flügelelement (10) ein Rückstellelement (15), bspw. in Form eines Schaumpads und/oder einer Rückstellfeder, für ein Gehäuse (11) des Flügelelementes (10) aufweist,
um insbesondere das Gehäuse (11) des Flügelelementes (10) nach einer Aufnahme mindestens einer Betätigungshandlung (B1, B2) des Benutzers (300), insbesondere einer Berührung, vorzugsweise einer Zugbewegung (B1) und/oder einer Druckbewegung (B2), relativ zu einer Trägerplatte (12) in eine Ruheposition zurückzustellen, und/oder um bevorzugt einen Innenraum des Gehäuses (11) abzuschließen und/oder abzudichten,
wobei vorzugsweise das Rückstellelement (15) an der Trägerplatte (12) abgestützt ist, und/oder dass das Flügelelement (10) ein Kabel (13) mit einem Stecker aufweist, um eine erste Leiterplatte (PCB1) im Flügelelement (10) an eine zweite Leiterplatte (PCB2) in der Trägereinheit (20) elektrisch, datentechnisch und/oder kommunikationstechnisch anzuschließen,
insbesondere nachdem das Flügelelement (10) von außen am beweglichen Teil (201) des Fahrzeuges (200) angeordnet wurde und nachdem die Trägereinheit (20) von innen am beweglichen Teil (201) des Fahrzeuges (200) angeordnet wurde und vorzugsweise die Trägereinheit (20) am Flügelelement (10) befestigt wurde.

8. Betätigungsvorrichtung (100) nach einem der vorhergehenden Ansprüche,
**dadurch gekennzeichnet,**
**dass** das Flügelelement (10) eine Beleuchtungseinheit (L1), insbesondere in Form einer LED-Einheit, aufweist, die dazu ausgeführt ist,
um die Betätigungsvorrichtung (100) für eine Betätigung sichtbar zu machen,
und/oder um eine Ambientebeleuchtung des Flügelelements (10) bereitzustellen,
und/oder um eine Betätigung der Betätigungsvorrichtung (100) zu erleichtern,
und/oder dass die Sensorauswerteelektronik (E1) eine erste Sensorauswerteeinheit (E1(S1)) für eine erste Sensoreinheit (S1), insbesondere in Form einer induktiven Sensoreinheit, aufweist,
und/oder dass die Sensorauswerteelektronik (E1) eine zweite Sensorauswerteeinheit (E1 (S2)) für eine zweite Sensoreinheit (S2), insbesondere in Form einer kapazitiven Sensoreinheit, aufweist.

9. Betätigungsvorrichtung (100) nach einem der vorhergehenden Ansprüche,
**dadurch gekennzeichnet,**
**dass** das Flügelelement (10) einen ersten Montageträger (M1), insbesondere umfassend eine Metalllegierung, vorzugsweise Zinklegierung, aufweist, der dazu ausgeführt ist, um das Flügelelement (10) von außen am beweglichen Teil (201) des Fahrzeuges (200), bevorzugt form- und/oder kraftschlüssig, bspw. mithilfe einer Schraubverbindung, zu befestigen,
und/oder dass das Flügelelement (10) einen ersten Montageträger (M1) aufweist, der dazu ausgeführt ist, um das Flügelelement (10) an einem zweiten Montageträger (M2) der Trägereinheit (20) zu befestigen,
und/oder dass das Flügelelement (10), insbesondere der erste Montageträger (M1), und die Trägereinheit (20), insbesondere der zweite Montageträger (M2) derart ausgebildet sind,
**dass** die Sensorauswerteelektronik (E1), insbesondere die erste Leiterplatte (PCB1), und die Hauptelektronikeinheit (E2), insbesondere die zweite Leiterplatte (PCB2) versetzt zueinander, vorzugsweise um 90°, angeordnet sind.

10. Betätigungsvorrichtung (100) nach einem der vorhergehenden Ansprüche,
**dadurch gekennzeichnet,**
**dass** die Trägereinheit (20) ein Gehäuse (21) aufweist, das dazu ausgeführt ist, eine zweite Leiterplatte (PCB2) für die Hauptelektronikeinheit (E2), eine Antriebseinheit (22) für eine Entkoppelungseinheit (23), die Entkoppelungseinheit (23), ein Verbindungselement (24) und/oder ein Notentriegelungsmechanismus (25, 26) aufzunehmen.

11. Betätigungsvorrichtung (100) nach einem der vorhergehenden Ansprüche,
**dadurch gekennzeichnet,**
**dass** die Trägereinheit (20) eine Antriebseinheit (22) für eine Entkoppelungseinheit (23) und die Entkoppelungseinheit (23) aufweist,
wobei die Entkoppelungseinheit (23) dazu ausgeführt ist, eine mechanische Verbindung zwischen dem Flügelelement (10) und der Trägereinheit (20) zu lösen,
insbesondere wenn die Hauptelektronikeinheit (E2) und/oder die Sensorauswerteelektronik (E1) ein fahrzeugseitiges Crashsignal empfangen hat, und vorzugsweise, wenn die Hauptelektronikeinheit (E2) die Antriebseinheit (22) zum Antreiben einer Entkoppelungseinheit (23) entsprechend ansteuert,
und/oder dass die Trägereinheit (20) ein Verbindungselement (24), insbesondere in Form einer Verbindungsachse, aufweist, um das Flügelelement (10) bewegbar, bspw. schwenkbar und/oder drehbar, an der Trägereinheit (20) zu halten, insbesondere wenn eine mechanische Verbindung zwischen dem Flügelelement (10) und der Trägereinheit (20) gelöst wurde, vorzugsweise wenn die Hauptelektronikeinheit (E2) und/oder die Sensorauswerteelektronik (E1) ein fahrzeugseitiges Crashsignal empfangen hat,
und/oder dass die Trägereinheit (20) einen Hebel (25) für einen Bowdenzug (26) und den Bowdenzug (26) aufweist, um einen Notentriegelungsmechanismus (25, 26) im Crashfall bereitzustellen,
insbesondere mithilfe des Flügelelementes (10), welches bewegbar, bspw. schwenkbar und/oder drehbar, relativ zu der Trägereinheit (20) betätigt werden kann, um ein elektromechanisches Schloss (130) des Fahrzeuges (200) zu betätigen, insbesondere zum Entriegeln und/oder zum Öffnen.

12. Betätigungsvorrichtung (100) nach einem der vorhergehenden Ansprüche,
**dadurch gekennzeichnet,**
**dass** die Trägereinheit (20) eine Buchse (27) für einen Stecker am Kabel (13) aufweist, um eine erste Leiterplatte (PCB1) im Flügelelement (10) an eine zweite Leiterplatte (PCB2) in der Trägereinheit (20) elektrisch, datentechnisch und/oder kommunikationstechnisch anzuschließen,
insbesondere nachdem das Flügelelement (10) von außen am beweglichen Teil (201) des Fahrzeuges (200) angeordnet wurde und nachdem die Trägereinheit (20) von innen am beweglichen Teil (201) des Fahrzeuges (200) angeordnet wurde und vorzugsweise nachdem die Trägereinheit (20) am Flügelelement (10) befestigt wurde,
und/oder dass die Trägereinheit (20), insbesondere das Gehäuse (21) der Trägereinheit (20), eine Buchse (28) aufweist, um die Betätigungsvorrichtung (100) elektrisch, datentechnisch und/oder kommunikationstechnisch mit einer fahrzeugseitigen Steuervorrichtung (120) zu verbinden,
und/oder dass die Sensorauswerteelektronik (E1) und/oder die Hauptelektronikeinheit (E2) eine Kommunikationsschnittstelle (E3) zu einer fahrzeugseitigen Steuervorrichtung (120) aufweisen/aufweist, die bspw. zum Betätigen des Schlosses (130) ausgeführt ist.

13. Betätigungsvorrichtung (100) nach einem der vorhergehenden Ansprüche,
**dadurch gekennzeichnet,**
**dass** die Hauptelektronikeinheit (E2) mit einer Steuereinheit (E2(110)) zum Bereitstellen von Steuersignalen für das Zugangssystem (110) ausgeführt ist, die dazu dienen können, um das bewegliche Teil (201) des Fahrzeuges (200) zu betätigen, insbesondere zu entriegeln und/oder zu öffnen und/oder zu schließen und/oder zu verriegeln,
und/oder dass die Hauptelektronikeinheit (E2) eine NFC-Messverarbeitungseinheit (NFC1), eine NFC-Schnittstelle (NFC2), insbesondere in Form eines NFC-Transceivers, aufweist,
und/oder dass die Hauptelektronikeinheit (E2) mindestens eine Kommunikationsschnittstelle (KS) zu einem Fahrzeugnetz aufweist, bspw. umfassend eine CAN-Schnittstelle (KS1) und/oder eine LIN-Schnittstelle (KS2),
und/oder dass die Hauptelektronikeinheit (E2) eine Beleuchtungsschnittstelle (L2), insbesondere in Form einer LED-Schnittstelle, aufweist,
und/oder dass die Hauptelektronikeinheit (E2) eine Steuereinheit (E2(CAN/LIN)) für mindestens eine Kommunikationsschnittstelle (KS) zu einem Fahrzeugnetz aufweist, und/oder dass die Hauptelektronikeinheit (E2) eine Steuereinheit (E2(LED)) für eine Beleuchtung aufweist..

14. Betätigungsvorrichtung (100) nach einem der vorhergehenden Ansprüche,
**dadurch gekennzeichnet,**
**dass** die Sensorvorrichtung (S1, S2) mindestens ein Radar-Sensorelement, ein UWB-Sensorelement, insbesondere umfassend ein Pulsradar- oder ein Dauerstrichradar-Messverfahren, und/oder ein Piezo-Sensorelement aufweist,
und/oder dass die erste Elektronikvorrichtung (E1) dazu ausgeführt ist, die Sensorvorrichtung (S1, S2), zum Erfassen eines Hindernisses im Bewegungsbereich des beweglichen Teiles (201) anzusteuern,
und/oder dass die erste Elektronikvorrichtung (E1) dazu ausgeführt ist, ein Warnsignal und/oder ein Stoppsignal bereitzustellen, wenn die Sensorvorrichtung (S1, S2) ein Hindernis im Bewegungsbereich des beweglichen Teiles (201) erfasst hat.

15. Zugangssystem (110) für ein Fahrzeug (200), aufweisend eine Betätigungsvorrichtung (100) nach einem der vorhergehenden Ansprüche.
